# EUROPEAN PATENT APPLICATION

(11) **EP 4 708 406 A2**
(43) Date of publication of application: **11.03.2026**
(21) Application number: 25218964.2
(22) Date of filing: 27.11.2025
(51) Int. Cl.: H01M 4/70, H01M 50/463, H01M 50/533, H01M 50/534, H01M 50/536

(54) **ELECTRODE PLATE, SECONDARY BATTERY, AND ELECTRONIC DEVICE**

(30) Priority: 27.11.2024 CN 202411718200
(71) Applicant: Ningde Amperex Technology Limited, Ningde, Fujian 352100 (CN)
(72) Inventor: LIN, Xueqi, Ningde City, Fujian Province, 352100 (CN); HUANG, Chu, Ningde City, Fujian Province, 352100 (CN); LIN, Sen, Ningde City, Fujian Province, 352100 (CN)
(74) Representative: Kraus & Lederer PartGmbB

(57) **Abstract**

A first metal layer (11) is provided with a plurality of first pores, a second metal layer (12) is provided with a plurality of second pores, an insulation layer (13) is provided with a plurality of second pores, and the first pores, the second pores, and the third pores being configured to transmit ions. The electrode plate (10) includes a first tab (17) and a first insulation adhesive (17a), where a first portion of the first tab (17) is connected to the first metal layer (11), along the thickness direction of the electrode plate (10), a projection of a third portion is located outside a projection of the first metal layer (11), and the first insulation adhesive (17a) is disposed on the surface of the third portion and that faces the second metal layer (12), and the first insulation adhesive (17a) is connected to the first metal layer (11). A first active material layer (14) is disposed on a surface of the first metal layer (11) and facing away from the insulation layer (13), and a second active material layer (15) is disposed on a surface of the second metal layer (12) and facing away from the insulation layer (13), where the first active material layer (14) and the second active material layer (15) are of opposite polarities.

## Description

### TECHNICAL FIELD

This application relates to the technical field of batteries, and in particular, to an electrode plate, a secondary battery, and an electronic device.

### BACKGROUND

A lithium-ion battery has the advantages of high energy density, high energy efficiency, long cycle life, etc., and is thus widely applied in the fields of consumer electronics and power energy storage devices. The lithium-ion battery typically includes a positive electrode plate, a separator, and a negative electrode plate that are wound or stacked. Due to the limitations of capabilities of current winding and stacking processes, the lithium-ion battery needs to reserve certain overhang regions between the negative electrode plate and the positive electrode plate when designed, that is, an active material layer of the negative electrode plate extends beyond an active material layer of the positive electrode plate, so as to reduce lithium plating on the electrode plates and ensure the safety of the lithium-ion battery. However, the overhang regions occupy a certain amount of space, thus affecting the energy density of the lithium-ion battery.

### SUMMARY

This application aims to provide an electrode plate, a secondary battery, and an electronic device, in order to reduce the technical problem that overhang regions affect the energy density of a battery.

Embodiments of this application adopt the following technical solution:

In a first aspect, this application provides an electrode plate. The electrode plate includes a first metal layer, a second metal layer, and an insulation layer disposed between the first metal layer and the second metal layer. The first metal layer is provided with a plurality of first pores, the second metal layer is provided with a plurality of second pores, and the insulation layer is provided with a plurality of third pores, where the first pores, the second pores, and the third pores are configured to transmit ions. The electrode plate includes a first tab and a first insulation adhesive. The first tab includes a first portion and a third portion connected to each other, where the first portion is connected to the first metal layer, and along a thickness direction of the electrode plate, a projection of the third portion is located outside a projection of the first metal layer. The first insulation adhesive is disposed on a surface of the third portion and that faces the second metal layer, and the first insulation adhesive is connected to the first metal layer. A first active material layer is disposed on a surface of the first metal layer and facing away from the insulation layer, and a second active material layer is disposed on a surface of the second metal layer and facing away from the insulation layer, where the first active material layer and the second active material layer are of opposite polarities.

In the above technical solution, a positive active material layer and a negative active material layer are located on the two sides of the single electrode plate, respectively. During coating, symmetrical coating of the positive active material layer and the negative active material layer may be adopted. Compared with traditional coating of active materials on different electrode plates, misalignment between the positive active material layer and the negative active material layer can be reduced, and overhang regions can be reduced while the risk of lithium plating is reduced, thereby increasing the energy density of a secondary battery.

In addition, since the positive active material layer and the negative active material layer are located on the two sides of the single electrode plate, respectively, when an electrode assembly is prepared, only the single electrode plate needs to be wound, or a plurality of single-type electrode plates are stacked, which can simplify a manufacturing process. When the single electrode plate is wound, the problem of misalignment between a positive electrode plate and a negative electrode plate when they are stacked and wound is avoided, which can reduce or eliminate the need for the overhang regions, thereby increasing the energy density of the secondary battery. When the plurality of single-type electrode plates are stacked, lithium ions deintercalated from the positive active material layer on one side of each electrode plate can be intercalated into the negative active material layer on the other side of the electrode plate, such that the lithium ions deintercalated from the positive active material layer can be intercalated into the negative active material layer all the time, which can not only reduce the problem of lithium plating, but also reduce the overhang regions, thereby increasing the energy density of the secondary battery.

Moreover, the insulation layer insulates the first metal layer from the second metal layer. That is, the insulation layer acts as a separator. After stacking or stacking and winding of the electrode plates, the amount of the separators used and the stacking step of the separators can be reduced, which can not only simplify the manufacturing process, but also increase the space utilization rate, thereby increasing the energy density of the secondary battery.

In addition, the first insulation adhesive can insulate the first tab from the second metal layer and can effectively reduce contact between cutting burrs of the first tab and the second metal layer as well as between edge burrs of the first metal layer and the second metal layer, thereby reducing short circuits.

In some embodiments, the first active material layer includes a first region. A side of the first region in a length direction of the electrode plate extends beyond the second active material layer, and the first region has a length of L₁, where L₁ ≤ 0.5 mm; alternatively, the second active material layer includes a second region. A side of the second region in the length direction of the electrode plate extends beyond the first active material layer, and the second region has a length of L₂, where L₂ ≤ 0.5 mm. An overhang region in the length direction of the electrode plate can be reduced to 0.3 mm or less, thereby increasing the energy density of the secondary battery.

In some other embodiments, the first active material layer includes a third region. A side of the third region in a width direction of the electrode plate extends beyond the second active material layer, and the third region has a width of W₁, where W₁ ≤ 0.5 mm; Alternatively, the second active material layer includes a fourth region. A side of the fourth region in the width direction of the electrode plate extends beyond the first active material layer, and the fourth region has a width of W₂ ≤ 0.5 mm. An overhang region in the width direction of the electrode plate can be reduced to 0.5 mm or less, thereby further increasing the energy density of the secondary battery.

In some embodiments, L₁ ≤ 0.3 mm, or L₂ ≤ 0.3 mm. The overhang region in the length direction of the electrode plate can be reduced to 0.3 mm or less, thereby increasing the energy density of the secondary battery.

In some other embodiments, W₁ ≤ 0.3 mm, or W₂ ≤ 0.3 mm. The overhang region in the width direction of the electrode plate can be reduced to 0.3 mm or less, thereby further increasing the energy density of the secondary battery.

In some embodiments, L₁ ≤ 0.1 mm, or L₂ ≤ 0.1 mm. The overhang region in the length direction of the electrode plate can be reduced to 0.1 mm or less, thereby increasing the energy density of the secondary battery.

In some other embodiments, W₁ ≤ 0.1 mm, or W₂ ≤ 0.1 mm. The overhang region in the width direction of the electrode plate can be reduced to 0.1 mm or less, thereby further increasing the energy density of the secondary battery. By adopting the solution of this application, the overhang regions can be reduced to nearly zero, or even non-existent.

In some embodiments, the electrode plate further includes a first adhesive layer. The first tab is bonded to the first metal layer through the first adhesive layer. The bonding manner does not produce burrs, which can reduce the risk of short circuits. Moreover, bonding enables a stress to be more uniformly distributed on a contact surface between the first tab and the first metal layer, thereby reducing the risk of damage and tearing of the electrode plate caused by stress concentration. In addition, a bonding process is simpler and easier to operate than welding, which can simplify the manufacturing process and improve the production efficiency.

In some embodiments, the first adhesive layer includes a first bonding portion and a first conductive portion. The first conductive portion is filled in the first bonding portion. The first bonding portion includes at least one of epoxy resin, acrylic resin, or polyimide. The above materials have not only good bonding performance, but also good chemical corrosion resistance and high temperature resistance, which can improve the strength of connection between the first tab and the first metal layer and prolong the service life.

In some other embodiments, the first conductive portion includes at least one of silver, copper, nickel, or carbon nanotubes, which can improve the electrical conductivity of the first adhesive layer, reduce the resistance between the first tab and the first metal layer, and improve the current-carrying capability.

In some embodiments, the first insulation adhesive includes a first substrate and first insulation portions. The first insulation portions are filled in the first substrate. The first substrate includes at least one of polyethylene, polypropylene, polyphenylene sulfide, or polycarbonate, can cover burrs of the first tab, and can insulate the first tab from the second metal layer.

In some other embodiments, the first insulation portions include at least one of aluminum oxide, magnesium oxide or zirconium oxide. The resistivity can be increased, which is conducive to reducing the leakage of a current from the first insulation adhesive and reducing the risk of short circuits inside the secondary battery.

In some embodiments, the electrode plate further includes a third insulation adhesive. The third insulation adhesive is disposed on a surface of the first tab and facing away from the second metal layer, and the third insulation adhesive is connected to the first metal layer, which can insulate the second active material layer adjacent to the first tab, thereby reducing short circuits caused by contact between the burrs and the second active material layer.

In some embodiments, along the thickness direction of the electrode plate, a projection of the third insulation adhesive partially overlaps the projection of the first metal layer. On the one hand, the bonding area can be increased, thereby improving the bonding strength; and on the other hand, the third insulation adhesive can insulate a part of the first tab on the electrode plate, which can reduce short circuits caused by contact between burrs of the part and the second active material layer adjacent thereto.

In some other embodiments, along the thickness direction of the electrode plate, a projection of the first insulation adhesive is located within the projection of the third insulation adhesive. By reasonably distributing the amounts of the first insulation adhesive and the third insulation adhesive used, the extension of the insulation adhesives to the active material layers can be reduced.

In some embodiments, along the length direction of the electrode plate, the first adhesive layer has a width of W₃, where 3 mm ≤ W₃ ≤ 10 mm. While the performance of bonding between the first tab and the first metal layer is improved, covering of the first active material layer can be reduced, and adhesive overflow is reduced. In some other embodiments, 3 mm ≤ W₃ ≤ 6 mm.

In some embodiments, along the length direction of the electrode plate, the first insulation adhesive has a width of W₄, and the first tab has a width of W₅, where 0 ≤ W₄ - W₅ ≤ 1 mm. The first tab can be completely insulated from the second metal layer, thereby reducing short circuits.

In some embodiments, along the width direction of the electrode plate, the first insulation adhesive has a length of L₃, where 0.5 mm ≤ L₃ ≤ 5 mm. Further, 1 mm ≤ L₃ ≤ 1.5 mm. The first tab is completely insulated from the second metal layer, thereby reducing the short circuits.

In some embodiments, along the thickness direction of the electrode plate, the first insulation adhesive has a thickness of T6, where 0.03 mm ≤ T6 ≤ 0.3 mm. The impact on the first active material layer can be reduced while burrs are insulated.

In some other embodiments, 0.03 mm ≤ T6 ≤ 0.08mm, thereby further reducing the amount of the first insulation adhesive used and insulating the burrs.

In some embodiments, the electrode plate further includes a second tab and a second insulation adhesive. The second tab includes a second portion and a fourth portion connected to each other, where the second portion is connected to the second metal layer, and along the thickness direction of the electrode plate, a projection of the fourth portion is located outside a projection of the second metal layer. The second insulation adhesive is disposed on a surface of the second tab and that faces the first metal layer, and the second insulation adhesive is connected to the second metal layer. The second tab can be insulated from the first metal layer, and the contact between cutting burrs of the second tab and the first metal layer as well as between burrs of the second metal layer and the first metal layer can be effectively reduced, thereby reducing short circuits.

In some embodiments, the electrode plate includes a second adhesive layer. The second tab is bonded to the second metal layer through the second adhesive layer. The bonding manner does not produce burrs, which can reduce the risk of short circuits. Moreover, bonding enables a stress to be more uniformly distributed on a contact surface between the first tab and the first metal layer, thereby reducing the risk of damage and tearing of the electrode plate caused by stress concentration. In addition, a bonding process is simpler and easier to operate than welding, which can simplify the manufacturing process and improve the production efficiency.

In some embodiments, along the thickness direction of the electrode plate, a projection of the first tab is located outside a projection of the second tab. The first tab does not overlap the second tab, which can reduce short circuits caused by contact between the first tab and the second tab.

In some embodiments, the electrode plate further includes a fourth insulation adhesive. The fourth insulation adhesive is disposed on a surface of the second tab and facing away from the first metal layer. The risk of contact with the first active material layer adjacent to the second tab can be reduced, thereby reducing short circuits caused by contact between burrs and the first active material layer.

In some embodiments, along the thickness direction of the electrode plate, a projection of the fourth insulation adhesive partially overlaps the projection of the second metal layer. On the one hand, the bonding area can be increased, thereby improving the bonding strength; and on the other hand, the fourth insulation adhesive can insulate a part of the second tab on the electrode plate, which can reduce short circuits caused by contact between burrs of the part and the first active material layer adjacent thereto.

In some other embodiments, along the thickness direction of the electrode plate, a projection of a second insulation adhesive is located within the projection of the fourth insulation adhesive. By reasonably distributing the amounts of the second insulation adhesive and the fourth insulation adhesive used, the extension of the insulation adhesives to the active material layers can be reduced.

In a second aspect, this application further provides a secondary battery. The secondary battery includes a housing and an electrode assembly disposed within the housing. The electrode assembly includes the electrode plate according to any one of the embodiments in the first aspect.

In some embodiments, the electrode assembly includes the separator and the single electrode plate. The separator and the single electrode plate are stacked and wound for several circles. There is no need to dispose the separator, and thus there is no stacking and winding operation of the separator, which can further simplify the manufacturing process and further reduce or eliminate the need for the overhang regions, thereby increasing the energy density of the secondary battery.

In some embodiments, the several electrode plates and the several separators are alternately stacked in sequence. Alternatively, the several electrode plates are stacked in sequence, and the single separator is threaded between two adjacent electrode plates in sequence. The insulation layer acts as the separator. After stacking of the electrode plates, the amount of the separators used and the stacking step of the separators can be reduced, which can not only simplify the manufacturing process, but also increase the space utilization rate, thereby increasing the energy density of the secondary battery.

In a third aspect, this application further provides an electronic device. The electronic device includes the secondary battery according to any one of the embodiments in the second aspect.

The additional aspects and advantages of the embodiments of this application may be partially described and shown in the subsequent description or illustrated by the implementation of the embodiments of this application.

### BRIEF DESCRIPTION OF DRAWINGS

One or more embodiments are exemplarily illustrated by accompanying drawings corresponding thereto. These exemplary illustrations do not constitute a limitation on the embodiments. Components with same reference numerals in the accompanying drawings are represented as similar components. Unless otherwise stated, the figures in the accompanying drawings do not constitute a scale limitation.
FIG. 1 is a schematic diagram (top view) of a stacked structure of a positive electrode plate and a negative electrode plate in the related art;
FIG. 2 is a schematic diagram (side view) of the stacked structure of the positive electrode plate and the negative electrode plate in the related art;
FIG. 3 is a local cross-sectional view of an electrode plate according to some embodiments of this application;
FIG. 4 is a schematic diagram of a jelly-roll structure of an electrode assembly according to some embodiments of this application;
FIG. 5 is a schematic diagram of a laminated structure of an electrode assembly according to some embodiments of this application;
FIG. 6a is a cross-sectional view (in a length direction) of the electrode plate according to some embodiments of this application;
FIG. 6b is a cross-sectional view (in the length direction) of the electrode plate according to some embodiments of this application;
FIG. 7a is a cross-sectional view (in a width direction) of the electrode plate according to some embodiments of this application;
FIG. 7b is a cross-sectional view (in the width direction) of the electrode plate according to some embodiments of this application;
FIG. 8 is a local cross-sectional view of the electrode plate according to some embodiments of this application;
FIG. 9 is a schematic diagram of the jelly-roll structure of the electrode assembly according to some embodiments of this application;
FIG. 10 is a schematic diagram of the laminated structure of the electrode assembly according to some embodiments of this application;
FIG. 11 is a schematic structural diagram of the electrode plate according to some embodiments of this application;
FIG. 12 is a schematic structural diagram of the electrode plate according to some embodiments of this application;
FIG. 13 is a schematic diagram of a partial structure of the electrode plate according to some embodiments of this application;
FIG. 14 is a schematic structural diagram of a first insulation adhesive according to some embodiments of this application;
FIG. 15 is a cross-sectional view of the electrode plate according to some embodiments of this application;
FIG. 16 is a schematic structural diagram of a first adhesive layer according to some embodiments of this application;
FIG. 17 is a schematic structural diagram of a secondary battery according to some embodiments of this application;
FIG. 18 is a schematic diagram of the jelly-roll structure of the electrode assembly according to some embodiments of this application;
FIG. 19 is a schematic diagram of the laminated structure of the electrode assembly according to some embodiments of this application;
FIG. 20 is a schematic diagram of the laminated structure of the electrode assembly according to some embodiments of this application;
FIG. 21 is a schematic diagram of the laminated structure of the electrode assembly according to some embodiments of this application; and
FIG. 22 is a schematic diagram of the laminated structure of the electrode assembly according to some embodiments of this application.

### List of reference numerals:

1000. secondary battery;
100. electrode assembly;
10. electrode plate; 11. first metal layer; 111. first pore; 12. second metal layer; 121. second pore; 13. insulation layer; 131. third pore; 14. first active material layer; 141. first region; 143. third region; 15. second active material layer; 152. second region; 154. fourth region; 11a. composite current collector; 16. isolation layer; 17. first tab; 17a. first insulation adhesive; 17a1. first substrate; 17a2. first insulation portion; 17b. third insulation adhesive; 17c. first adhesive layer; 18. second tab; 18a. second insulation adhesive; 18b. fourth insulation adhesive; 18c. second adhesive layer;
20. separator;
10a. first segment;
10b. second segment;
10c. third segment; 10c1. first surface; 10c2. first finishing adhesive;
10d. first outer electrode plate; 10d1. second surface; 10d2. second finishing adhesive;
10e. inner electrode plate;
10f. second outer electrode plate; 10f1. third surface; 10f2. third finishing adhesive;
101. first inner active material layer; 102. second inner active material layer; 103. second outer active material layer; 104. third outer active material layer; 105. first outer active material layer;
200. housing;
1a. positive electrode plate; 11a. positive tab; 1b. negative electrode plate; 11b. negative tab; 1b1. overhang region;
X. first direction; Y. second direction; and Z. third direction.

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

In this application, reference to "embodiment" means that specific features, structures or characteristics described with reference to the embodiment may be incorporated in at least one embodiment of this application. Reference to this term in different places of the description does not necessarily represent the same embodiment, nor does it represent an independent or alternative embodiment in a mutually exclusive relationship with other embodiments.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, "a plurality of" means two or more unless otherwise expressly and specifically defined.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

The technical features described below in different embodiments of this application may be combined with each other as long as they do not conflict with each other.

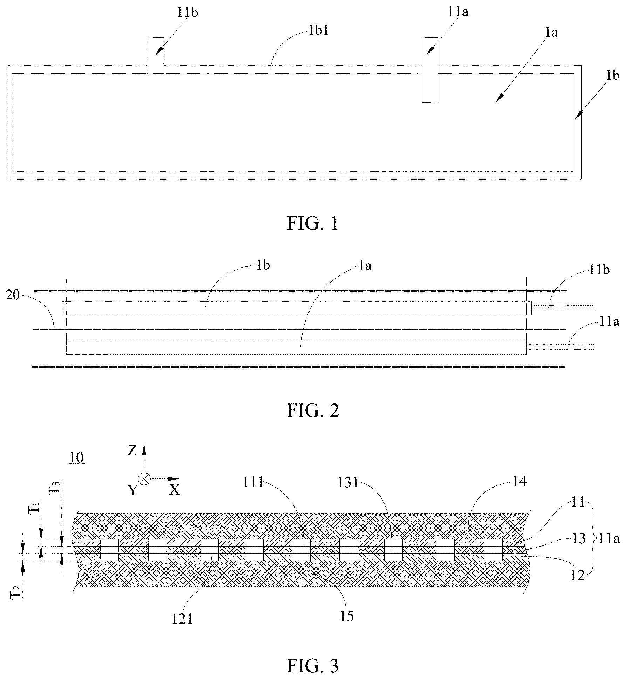

A lithium-ion battery, that is, a secondary battery, has the advantages of high energy density, high energy efficiency, long cycle life, etc., and is thus widely applied in the fields of consumer electronics and power energy storage devices. Referring to FIG. 1 and FIG. 2, a lithium-ion battery typically includes a positive electrode plate 1a, separators 20, and a negative electrode plate 1b. The separator 20, the positive electrode plate 1a, the separator 20, and the negative electrode plate 1b are sequentially stacked or are sequentially stacked and wound. During stacking or stacking and winding of the positive electrode plate 1a and the negative electrode plate 1b, the positive electrode plate 1a and the negative electrode plate 1b are prone to being misaligned with each other, making it difficult to ensure complete overlapping of a positive active material layer of the positive electrode plate and a negative active material layer of the negative electrode plate.

However, if the positive electrode plate 1a has a region not corresponding to the negative electrode plate 1b, it may cause lithium ions deintercalated from the region to be unable to be intercalated into the negative active material layer, making the problem of lithium plating prone to occurring. Therefore, the amount of the negative active material layer is typically increased. For example, overhang regions 1b1, that is, regions where the negative active material layer extends beyond the positive active material layer, are disposed on two sides of the negative electrode plate 1b in a width direction and/or two sides of the negative electrode plate 1b in a length direction, respectively to ensure that the negative active material layer has a sufficient margin to allow lithium ions deintercalated from the positive active material layer to be intercalated thereto, thereby reducing lithium plating. However, the capacity of the lithium-ion battery is still determined by the relatively small amount of positive active material layer. The overhang regions 1b1 occupy space, thus affecting the energy density of lithium-ion battery.

In order to reduce the above problem, in a first aspect, this application provides an electrode plate 10. Referring to FIG. 3, the electrode plate 10 includes a first metal layer 11, a second metal layer 12 and an insulation layer 13. Along a thickness direction, that is, a third direction Z, of the insulation layer 13, the insulation layer 13 is stacked between the first metal layer 11 and the second metal layer 12. The first metal layer 11 and the second metal layer 12 may be bonded to two sides of the insulation layer 13 in the thickness direction, that is, the third direction Z, by means of bonding, respectively. Or, the first metal layer 11 and the second metal layer 12 are plated on the two sides of the insulation layer 13 in the thickness direction, that is, the third direction Z, by means of evaporation, sputtering, vapor deposition, or the like, respectively.

The insulation layer 13 may be made of an organic polymer and may insulate the first metal layer 11 from the second metal layer 12. For example, the insulation layer 13 may be made of materials such as polyethylene (PP), polypropylene (PE), polyethylene terephthalate (PI), or polyimide (PET). For example, using the polyimide (PET) as an example, the polyimide (PET) has a good insulativity and corrosion resistance, as well as a good mechanical strength and toughness, which can provide a good support for the first metal layer 11 from the second metal layer 12, and is chemically stable.

In the embodiments of this application, by disposing the first metal layer 11 and the second metal layer 12 on the two sides of the insulation layer 13 in the thickness direction, that is, the third direction Z, respectively, the first metal layer 11, the insulation layer 13 and the second metal layer 12 may form a composite current collector 11a, which can achieve the toughness of the polymer layer and the mechanical strength of the metal layers concurrently, thereby not only facilitating winding of the electrode plate 10, but also reducing breaking and tearing of the electrode plate 10.

Along a thickness direction, that is, the third direction Z, of the electrode plate 10, the insulation layer 13 has a thickness of T₃, where 2 µm ≤ T₃ ≤ 10 µm. The applicant of this application finds through research that if the thickness of the insulation layer 13 is overly small, it may be difficult to effectively insulate the first metal layer 11 from the second metal layer 12, thus affecting the safety of a secondary battery 1000. If the thickness of the insulation layer 13 is overly large, it will not only affect the energy density, but may also extend a transmission path of lithium ions, thus affecting the transmission efficiency of the lithium ions. In the embodiments of this application, it is defined that 2 µm ≤ T₃ ≤ 10 µm. While the first metal layer 11 is insulated from the second metal layer 12, the transmission of the lithium ions can be facilitated, and the impact on the energy density is reduced. Moreover, the insulation layer 13 can have a relatively high mechanical strength, such that the insulation layer 13 can bear a certain stress and deformation during production, assembly, or use of the secondary battery 1000. For example, during winding and laminating of the secondary battery 1000, the electrode plate 10 needs to keep a good shape and structural stability. An appropriate thickness of the insulation layer 13 is conducive to improving mechanical performance of the electrode plate 10, such as tensile performance and bending resistance.

In some embodiments of this application, 4 µm ≤ T₃ ≤ 6 µm. While the first metal layer 11 is insulated from the second metal layer 12, the transmission of the lithium ions can further be facilitated, and the impact on the energy density is reduced.

In the embodiments of this application, the first metal layer 11 and the second metal layer 12 may serve as a positive conductive substrate and a negative conductive substrate of the secondary battery 1000, respectively. For example, the first metal layer 11 serves as the positive conductive substrate, and the second metal layer 12 serves as the negative conductive substrate; alternatively, the first metal layer 11 serves as the negative conductive substrate, and the second metal layer 12 serves as the positive conductive substrate.

In an example in which the first metal layer 11 serves as the positive conductive substrate, the first metal layer 11 may be an aluminum foil. The aluminum foil has a relatively high conductivity and relatively small resistance, which can improve the charge and discharge efficiency of the secondary battery 1000. Moreover, the aluminum foil has a certain strength and ductility. In production processes such as winding or laminating, the aluminum foil is not prone to rupturing or deforming, thereby ensuring the structural integrity of the secondary battery 1000. In addition, a positive electrode of the secondary battery 1000 is at a relatively high potential during charge and discharge. The aluminum foil is relatively stable at such potential and is less likely to undergo chemical reactions, thereby improving the charge and discharge stability of the secondary battery 1000. In some other embodiments, the first metal layer 11 may also be a titanium foil, a nickel foil, a stainless steel foil, or the like.

In an example in which the second metal layer 12 serves as the negative conductive substrate, the second metal layer 12 may be a copper foil. The copper foil has a relatively high conductivity, which can improve the charge and discharge efficiency of the secondary battery 1000. Moreover, the copper foil has a certain strength and ductility. In the production processes such as winding or laminating, the copper foil is not prone to rupturing or deforming, thereby ensuring the structural integrity of the secondary battery 1000. In addition, a negative electrode of the lithium-ion battery is at a relatively low potential during charge and discharge. The copper foil is relatively stable at such potential and is less likely to undergo chemical reactions, thereby improving the charge and discharge stability of the secondary battery 1000. In some other embodiments, the second metal layer 12 may also be a titanium foil, a nickel foil, a stainless steel foil, a silver foil, or the like.

Referring to FIG. 3, along the thickness direction of the electrode plate, the first metal layer has a thickness of T₁, where 0.1 µm ≤ T₁ ≤ 5 µm; and along the thickness direction, that is, the third direction Z, of the electrode plate 10, the first metal layer 11 has a thickness of T₁, where 0.8 µm ≤ T₁ ≤ 1.5 µm, which enables the first metal layer 11 to have relatively high electrical conductivity and to bear certain bending and tensile stresses, thereby reducing fracturing and breaking of the first metal layer 11. Further, 0.8 µm ≤ T1 ≤ 1.5 µm, which further enables the first metal layer 11 to have relatively high electrical conductivity and to bear certain bending and tensile stresses, thereby reducing fracturing and breaking of the first metal layer 11.

Based on the same inventive concept, the second metal layer 12 has a thickness of T₂, where 0.1 µm ≤ T₂ ≤ 5 µm, which enables the second metal layer 12 to have relatively high electrical conductivity and to be less fractured and broken while bearing certain bending and tensile stresses. Further, 0.8 µm ≤ T₂ ≤ 1.5 µm, which can further enable the second metal layer 12 to have relatively high electrical conductivity and to be less fractured and broken while bearing certain bending and tensile stresses.

In the embodiments of this application, referring to FIG. 3, the first metal layer 11 is provided with first pores 111, the second metal layer 12 is provided with second pores 121, and the insulation layer 13 is provided with third pores 131. For example, after the first metal layer 11, the insulation layer 13, and the second metal layer 12 are stacked, through pores that run through the composite current collector are formed in the composite current collector formed by the first metal layer 11, the insulation layer 13 and the second metal layer 12 by means of laser drilling, mechanical punching, chemical etching, or the like, where parts of the through pores on the first metal layer 11 are the first pores 111, parts of the through pores on the second metal layer 12 are the second pores 121, and parts of the through pores on the insulation layer 13 are the third pores 131. Alternatively, the first metal layer 11, the second metal layer 12, and the insulation layer 13 are separately drilled, after which the first metal layer 11, the insulation layer 13 and the second metal layer 12 are stacked.

The first pores 111, the second pores 121, and the third pores 131 are configured to transmit ions. For example, lithium ions on a side of the first metal layer 11 and facing away from the insulation layer 13 are transmitted to the third pores 131 of the insulation layer 13 via the first pores 111, are then transmitted to the second pores 121, and finally reach a side of the second metal layer 12 and facing away from the insulation layer 13.

The first pores 111 have a diameter of R₁, where 100 nm ≤ R₁ ≤ 800 nm; and/or, the second pores 121 have a diameter of R₂, where 100 nm ≤ R₂ ≤ 800 nm; and/or, the third pores 131 have a diameter of R₃, where 200 nm ≤ R₃ ≤ 1000 nm. The insulation layer 13 can insulate the first metal layer 11 from the second metal layer 12, and smooth passage of the lithium ions can be ensured, thereby improving the transmission efficiency of the lithium ions between the positive active material layer and the negative active material layer. Preferably, 350 nm ≤ R₁ ≤ 700 nm; and/or, 350 nm ≤ R₂ ≤ 700 nm; and/or, 350 nm ≤ R₃ ≤ 500 nm, which is conducive to the transmission of the lithium ions while improving the mechanical strength of the electrode plate 10.

For the measurement of each pore diameter, a scanning electron microscope may be used to perform high resolution imaging surfaces of the first metal layer 11, the second metal layer 12, and the insulation layer 13 through a scanning electron microscope (SEM) method. By observing micropores, that is, the first pores 111, the second pores 121, and the third pores 131, in the first metal layer 11, the second metal layer 12, and the insulation layer 13, sizes, and shapes of the micropores can be intuitively learned. Then, an SEM image is processed by using an image analysis software, and diameters of the micropores or the pore diameters are measured.

The applicant of this application finds through research that when porosities of the first metal layer 11, the second metal layer 12, and the insulation layer 13 are overly low, the amount of an electrolyte solution filled between the first metal layer 11, the second metal layer 12, and the insulation layer 13 is insufficient, and transmission paths of ions are reduced, leading to a reduced conductivity of the ions, and thus leading to increased resistance of the secondary battery 1000 during charge and discharge, which is not conducive to improving the charge and discharge efficiency and the power performance, or may even affect the cycle life of the battery. A relatively high porosity means more pore space for the electrolyte solution to fill, which is conducive to keeping a sufficient electrolyte solution inside the electrode plate 10, thereby providing more transmission paths for the lithium ions, helping to increase the conductivity of the ions, such that the lithium ions can be migrated more quickly between the positive active material layer and the negative active material layer, thus improving the charge and discharge performance of the secondary battery 1000. However, the value of the porosity is typically inversely proportional to the mechanical strength. The relatively high porosity may cause a reduced mechanical strength, which may cause breaking and tearing of the first metal layer 11, the insulation layer 13 and the second metal layer 12.

In the embodiments of this application, it is defined that the first metal layer 11 has a porosity of G1, where 10% ≤ G₁ ≤ 75%; and/or, the second metal layer has a porosity of G₂, where 10% ≤ G₂ ≤ 75%; and/or, the insulation layer has a porosity of G₃, 30% ≤ G₃ ≤ 80%. The breaking and tearing of the first metal layer 11, the insulation layer 13, and the second metal layer 12 can be reduced while the transmission efficiency of the ions is improved. By defining the above appropriate pore diameters and porosities, it is conducive to uniform distribution of the electrolyte solution inside the electrode plate 10, such that the ion conducting performance of each part of the electrode plate 10 keeps consistent, thereby improving the overall performance of the secondary battery 1000.

In the embodiments of this application, 40% ≤ G₁ ≤ 60%; and/or, 40% ≤ G₂ ≤ 60%; and/or, 50% ≤ G₃ ≤ 70%. The breaking and tearing of the first metal layer, the insulation layer, and the second metal layer can be reduced, while the transmission efficiency of the ions is further improved.

For the porosities, a microscope observation method may be used in combination with image analysis. The surface and cross section of the composite current collector 11a formed by the first metal layer 11, the second metal layer 12, and the insulation layer 13 are observed through a microscope to obtain a microstructure image. Subsequently, pores in the image are identified and measured through the image analysis software to calculate the porosities.

Referring to FIG. 3, along the thickness direction, that is, the third direction Z, of the electrode plate 10, a surface of the first metal layer 11 and facing away from the first metal layer 11 is provided with a first active material layer 14, and a surface of the second metal layer 12 and facing away from the insulation layer 13 is provided with a second active material layer 15. Since the above first pores 111, second pores 121, and third pores 131 are configured to transmit ions, the ions can be transmitted between the first active material layer 14 and the second active material layer 15, thereby enabling electrochemical reactions. Therefore, the polarities of the first active material layer 14 and the second active material layer 15 may be set to be opposite. That is, in the embodiments of this application, the single electrode plate 10 may include both a positive electrode and a negative electrode.

For example, the first metal layer 11 is a positive conductive substrate. The first active material layer 14 is a positive active material layer and includes a positive active material, a conductive agent, a binder, or the like. The above material components are mixed, stirred well and coated on the first metal layer 11 to obtain the first active material layer 14. The positive active material may be one or more selected from lithium nickel cobalt manganese oxide, lithium cobalt oxide, lithium iron phosphate, lithium manganese oxide, lithium manganese iron phosphate, or the like.

The second metal layer 12 is a negative conductive substrate. The second active material layer 15 is a negative active material layer and includes a negative active material, a conductive agent, a binder, and the like. Such materials are mixed, stirred well and coated on the second metal layer 12 to obtain the second active material layer 15. The negative active material may be one or more selected from graphite, soft carbon, hard carbon, carbon fibers, elemental silicon, a silicon-oxygen compound, a silicon alloy, or the like.

In some other embodiments, the first metal layer 11 may also serve as the negative conductive substrate, and then the first active material layer 14 is the negative active material layer; the second metal layer 12 serves as the positive conductive substrate, and then the second active material layer 15 serves as the positive active material layer.

In the embodiments of this application, the positive active material layer and the negative active material layer are located on the two sides of the single electrode plate 10, respectively. During coating, symmetrical coating of the positive active material layer and the negative active material layer may be adopted. Compared with traditional coating of active materials on different electrode plates, misalignment between the positive active material layer and the negative active material layer can be reduced, and overhang regions can be reduced while the risk of lithium plating is reduced, thereby increasing the energy density of the secondary battery 1000. Moreover, in this case, the symmetrical coating of the positive active material layer and the negative active material layer can be conducive to achieving continuous coating of the positive active material layer and the negative active material layer, which simplifies the manufacturing process of the electrode plate 10 and can improve the production efficiency of the secondary battery 1000.

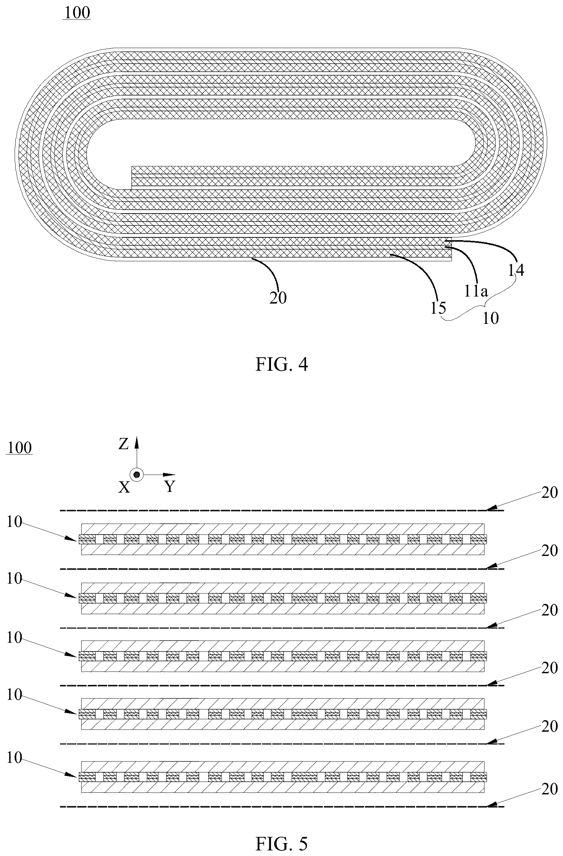

In addition, since the positive active material layer and the negative active material layer are located on the two sides of the single electrode plate 10, respectively, when an electrode assembly 100 is prepared, only the single electrode plate 10 needs to be wound, or a plurality of single-type electrode plates 10 are stacked, which can simplify the manufacturing process. When the single electrode plate 10 is wound, referring to FIG. 4, FIG. 4 shows a jelly-roll structure of the electrode assembly 100. The problem of misalignment between a positive electrode plate and a negative electrode plate when they are stacked and wound is avoided, which can reduce or eliminate the need for the overhang regions, thereby increasing the energy density of the secondary battery 1000. When the plurality of single-type electrode plates 10 are stacked, reference is made to FIG. 5, which shows a laminated structure of the electrode assembly 100. Since the first pores 111, the second pores 121, and the third pores 131 allow transmission of ions, lithium ions deintercalated from the positive active material layer on one side of each electrode plate 10 can be intercalated into the negative active material layer on the other side of the electrode plate 10, such that the lithium ions deintercalated from the positive active material layer can be intercalated into the negative active material layer all the time, which can not only reduce the problem of lithium plating, but also reduce the overhang regions, thereby increasing the energy density of the secondary battery 1000.

In addition, the insulation layer 13 insulates the first metal layer 11 from the second metal layer 12. That is, the insulation layer 13 acts as the separator 20. After stacking or stacking and winding of the electrode plates 10, the amount of the separators 20 used and the stacking step of the separators 20 can be reduced, which can not only simplify the manufacturing process, but also increase the space utilization rate, thereby increasing the energy density of the secondary battery 1000.

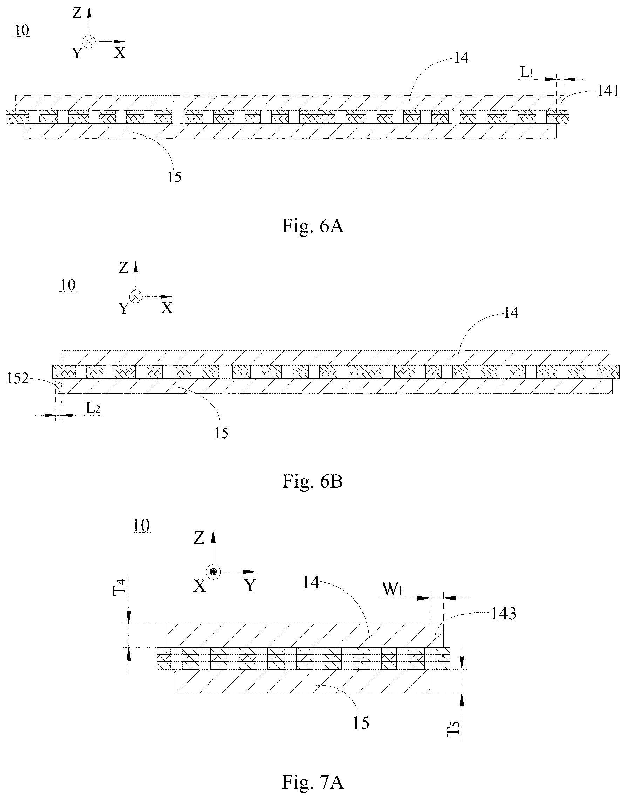

For the overhang region of the electrode plate 10 in a length direction, that is, a first direction X, in the embodiments of this application, the single electrode plate 10 includes the positive active material layer and the negative active material layer, and the overhang region can be reduced. Referring to FIG. 6, in an example in which the first active material layer 14 is the negative active material layer and the second active material layer 15 is the positive active material layer, along the length direction, that is, the first direction X, of the electrode plate 10, the first active material layer 14 includes a first region 141. A side of the first region 141 in the length direction, that is, the first direction X, of the electrode plate 10 extends beyond the second active material layer 15, and the first region 141 has a length of L₁, where L₁ ≤ 0.5 mm. The overhang region on the side of the electrode plate 10 in the length direction that is, the first direction X, can be reduced to 0.5 mm or less, thereby increasing the energy density of the secondary battery 1000. The other side of the first active material layer 14 can also be similarly arranged.

Further, L₁ ≤ 0.3 mm, the overhang region of the electrode plate 10 in the length direction, that is, the first direction X, is reduced to 0.3 mm or less, thereby further increasing the energy density of the secondary battery 1000. In some other embodiments, it may also be L₁ ≤ 0.1 mm, which enables the overhang region on the side of the electrode plate 10 in the length direction, that is, the first direction X, to be reduced to 0.1 mm or less, thereby further increasing the energy density of the secondary battery 100. By adopting the solution of this application, the overhang region of the electrode plate 10 in the length direction, that is, the first direction X, can be reduced to nearly zero, or even non-existent.

Alternatively, in some other embodiments, the second active material layer 15 is the negative active material layer, and the first active material layer 14 is the positive active material layer. Referring to FIG. 6b, the second active material layer 15 includes a second region 152. A side of the second region 152 in the length direction, that is, the first direction X, of the electrode plate 10 extends beyond the first active material layer 15, and the second region 152 has a length of L₂, where L₂ ≤ 0.5 mm. The overhang region on the side of the electrode plate 10 in the length direction that is, the first direction X, can be reduced to 0.5 mm or less, thereby increasing the energy density of the secondary battery 1000. The other side of the first active material layer 14 can also be similarly arranged.

Optionally, L₂ ≤ 0.3 mm. Further, L₂ ≤ 0.1 mm. By adopting the solution of this application, the overhang region on the side of the electrode plate 10 in the length direction, that is, the first direction X, can be reduced to nearly zero, or even non-existent.

For the overhang region of the electrode plate 10 in a width direction, that is, a second direction Y, in the embodiments of this application, the first active material layer 14 being the negative active material layer and the second active material layer 15 being the positive active material layer are used as an example. Referring to FIG. 7a, the first active material layer 14 includes a third region 143. A side of the third region 143 in the width direction, that is, the second direction Y, of the electrode plate 10 extends beyond the second active material layer 15, and the third region 143 has a width of W₁, where W₁ ≤ 0.5 mm. The overhang region on the side of the electrode plate 10 in the width direction, that is, the second direction Y, can be reduced to 0.5 mm or less, thereby increasing the energy density of the secondary battery 1000. Further, W₁ ≤ 0.3 mm. Further, W₁ ≤ 0.1 mm. By adopting the solution of this application, the overhang region on the side of the electrode plate 10 in the width direction, that is, the second direction Y, can be reduced to nearly zero, or even non-existent.

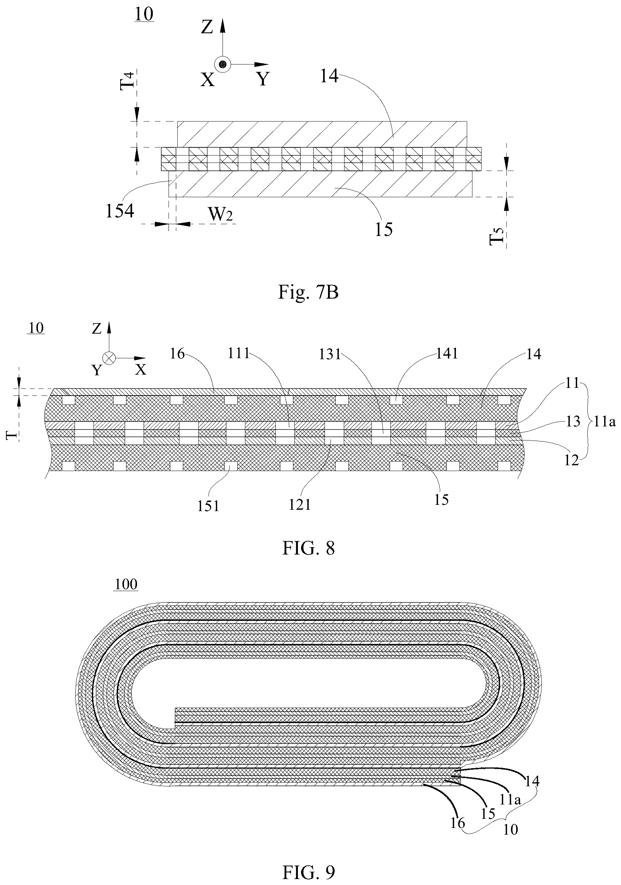

Alternatively, in some other embodiments, the second active material layer 15 is the negative active material layer, and the first active material layer 14 is the positive active material layer. Referring to FIG. 7b, the second active material layer 15 includes a fourth region 154. A side of the fourth region 154 in the width direction, that is, the second direction Y, of the electrode plate 10 extends beyond the first active material layer 14, and the fourth region 154 has a width of W₂ ≤ 0.5 mm. The overhang region on the side of the electrode plate 10 in the width direction, that is, the second direction Y, can be reduced to 0.5 mm or less, thereby increasing the energy density of the secondary battery 1000. Further, W₂ ≤ 0.3 mm. Still further, W₂ ≤ 0.1 mm. By adopting the solution of this application, the overhang region on the side of the electrode plate 10 in the width direction, that is, the second direction Y, can be reduced to nearly zero, or even non-existent.

It is hereby noted that the overhang region is preferably disposed on the negative active material layer, such that the negative active material layer has a sufficient margin to allow lithium ions deintercalated from the positive active material layer to be intercalated thereto, thereby reducing the risk of lithium plating.

In the embodiments of this application, by respectively disposing active material layers of opposite polarities on two sides of the composite current collector 11a in the thickness direction, that is, the third direction Z, and disposing the first pores 111, the second pores 121, and the third pores 131 to transmit ions, the ions can not only be transmitted outside the electrode plate 10, but also transmitted inside the electrode plate 10, thereby effectively improving the kinetics of the electrode plate 10. Therefore, the electrode plate 10 in the embodiments of this application is adaptable to thicker active material layers. For example, referring to FIG. 7a, along the thickness direction, that is, the third direction Z, of the electrode plate 10, the first active material layer 14 has a thickness of T₄, where 25 µm ≤ T₄ ≤ 100 µm; and/or, the second active material layer 15 has a thickness of T₅, where 25 µm ≤ T₅ ≤ 100 µm. The energy density of the secondary battery 1000 can be increased by disposing the thicker active material layers.

In some other embodiments, 60 µm ≤ T₄ ≤ 100 µm; and/or, 60 µm ≤ T₅ ≤ 100 µm, which can further increase the energy density of the secondary battery 1000. T₄ may be any value selected from 60 µm to 100 µm, e.g., 60 µm, 65 µm, 70 µm, 75 µm, 80 µm, 85 µm, 90 µm, 95 µm, or 100 µm. Similarly, T₅ may be any value selected from 60 µm to 100 µm, e.g., 60 µm, 65 µm, 70 µm, 75 µm, 80 µm, 85 µm, 90 µm, 95 µm, or 100 µm.

Referring to FIG. 8, in the embodiments of this application, the electrode plate 10 further includes an isolation layer 16. The isolation layer 16 is stacked on a surface of the first active material layer 14 and facing away from the first metal layer 11, or the isolation layer 16 is stacked on a surface of the second active material layer 15 and facing away from the second metal layer 12. Optionally, the isolation layer 16 may be bonded to the first metal layer 11 or the second metal layer 12 by means of bonding.

The isolation layer 16 may isolate ions. For example, the isolation layer 16 includes at least one of aluminum oxide, magnesium oxide, zirconium dioxide, boehmite, titanium dioxide, acrylic acid, polyurethane, or epoxy resin. The above materials have a good insulativity and corrosion resistance, which can prolong the service life of the electrode plate 10.

Optionally, along the thickness direction, that is, the third direction Z, of the electrode plate 10, the isolation layer 16 has a thickness of T, where 8 µm ≤ T ≤ 30 µm. The impact of the isolation layer 16 on the energy density of the secondary battery 1000 can be reduced while the ions are isolated.

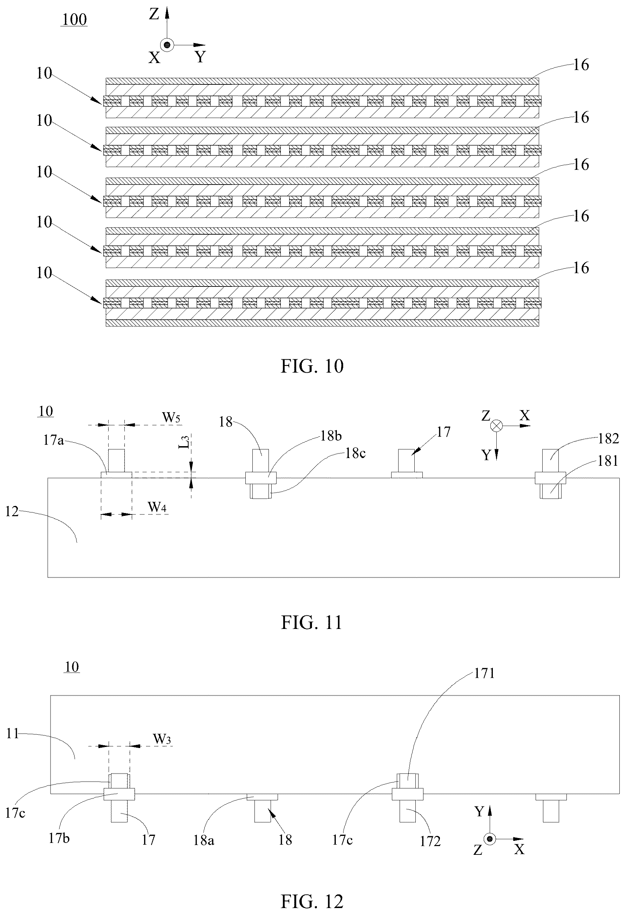

The isolation layer 16 may isolate ions on one side of the first metal layer 11 or the second metal layer 12, making it difficult or impossible for ions on the two sides of the electrode plate 10 to be transmitted, and defines that the ions are transmitted inside the electrode plate 10 via the first pores 111, the second pores 121, and the third pores 131. During staking or stacking and winding of the electrode plate 10, due to the presence of the isolation layer 16, the electrode assembly 100 can be formed by winding only a single electrode plate 10 or by stacking only a plurality of electrode plates 10. For example, referring to FIG. 9 and FIG. 10, which show a jelly-roll structure of the electrode assembly 100 and a laminated structure of the electrode assembly 100, respectively, no separator 20 needs to be disposed, thereby reducing the laminating step of separators 20, further simplifying the manufacturing step of the secondary battery 1000.

Moreover, the isolation layer 16 may define that the ions are transmitted between the first pores 111, the second pores 121 and the third pores 131, such that lithium ions deintercalated from the positive active material layer on one side of the electrode plate 10 can be intercalated into the negative active material layer on the other side of the electrode plate 10 all the time, and the lithium ions deintercalated from the positive active material layer can thus be intercalated into the negative active material layer all the time, which can not only reduce the problem of lithium plating, but also reduce or even eliminate the overhang regions, thereby further increasing the energy density of the secondary battery 1000. When the isolation layer 16 is disposed, since the isolation layer 16 defines that the ions are transmitted between the first pores 111, the second pores 121, and the third pores 131, the risk of lithium plating is minimized. Similarly, the overhang region can be reduced to 0.5 mm or less, or even 0.3 mm, 0.1 mm, or non-existent, thereby sufficiently increasing the energy density of the secondary battery 1000.

In the embodiments of this application, by respectively disposing the active material layers of opposite polarities on the two sides of the composite current collector 11a in the thickness direction, that is, the third direction Z, disposing the first pores 111, the second pores 121, and the third pores 131 to transmit ions, and disposing the isolation layer 16 on the side of the first metal layer 11 or the second metal layer 12 and facing away from the insulation layer 13, the ions are defined to be transmitted inside the electrode plate 10 through the isolation layer 16. In order to make an electrolyte solution to quickly and completely enter the first pores 111, the second pores 121, and the third pores 131, along the thickness direction, that is, the third direction Z, of the electrode plate 10, the first active material layer 14 has a thickness of T₄, wherein 25 µm ≤ T₄ ≤ 60 µm; and/or, the second active material layer 15 has a thickness of T₅, where 25 µm ≤ T₅ ≤ 60 µm. T₄ may be any value selected from 25 µm to 60 µm, e.g., 25 µm, 30 µm, 35 µm, 40 µm, 45 µm, 50 µm, 55 µm or 60 µm. Similarly, T₅ may be any value selected from 25 µm to 60 µm, e.g., 25 µm, 30 µm, 35 µm, 40 µm, 45 µm, 50 µm, 55 µm or 60 µm. It is conducive to making the electrolyte solution sufficiently infiltrate the first active material layer 14 and the second active material layer 15, as well as enabling the electrolyte solution to quickly and completely enter the first pores 111, the second pores 121 and the third pores 131, thereby improving the kinetics of the electrode plate 10.

In some embodiments, referring to FIG. 8, a plurality of first grooves 141 are disposed in the surface of the first active material layer 14 and facing away from the first metal layer 11. The disposing of the first grooves 141 can increase the contact area between the first active material layer 14 and the electrolyte solution, thereby improving the infiltration efficiency of the electrolyte solution into the first active material layer 14, such that the electrolyte solution can quickly enter the first pores 111, the second pores 121, and the third pores 131, and the ions can thus be transmitted inside the electrode plate 10, thereby further improving the kinetics of the electrode plate 10. Based on the same inventive conception, a plurality of second grooves 151 are disposed on the surface of the second active material layer 15 and facing away from the second metal layer 12. When the electrode plate 10 includes the isolation layer 16, the isolation layer 16 may also cover the first grooves 141 and the second grooves 151, which can reduce detachment and falling of the active material layers.

In some other embodiments, the first grooves 141 run through the first active material layer 14 along the length direction, that is, the first direction X, or the width direction, that is, the second direction Y, of the electrode plate 10, such that the electrolyte solution can enter the first grooves 141 in the length direction or the width direction of the electrode plate 10, and infiltrate the first active material layer 14, thereby improving the kinetics of the electrode plate 10.

In some other embodiments, the second grooves 151 run through the second active material layer 15 along the length direction, that is, the first direction X, or the width direction, that is, the second direction Y, of the electrode plate 10, such that the electrolyte solution can enter the second grooves 151 in the length or width direction of the electrode plate 10, and infiltrate the second active material layer 15, thereby improving the kinetics of the electrode plate 10. When the electrode plate 10 includes the isolation layer 16, it can be convenient for the electrolyte solution to enter the first grooves 141 or the second grooves 151 in the length direction, that is, the first direction X, or the width direction, that is, the second direction Y, of the electrode plate 10, which can also improve the kinetics of the electrode plate 10. Therefore, the first active material layer 14 and the second active material layer 15 may be appropriately thickened, for example, 25 µm ≤ T₄ ≤ 80 µm, and 25 µm ≤ T₅ ≤ 80 µm, thereby increasing the energy density of the secondary battery 1000. T₄ may be any value selected from 25 µm to 80 µm, e.g., 25 µm, 30 µm, 35 µm, 40 µm, 45 µm, 50 µm, 55 µm, 60 µm, 65 µm, 70 µm, 75 µm or 80 µm. Similarly, T₅ may be any value selected from 25 µm to 80 µm, e.g., 25 µm, 30 µm, 35 µm, 40 µm, 45 µm, 50 µm, 55 µm, 60 µm, 65 µm, 70 µm, 75 µm or 80 µm.

Preferably, 40 µm ≤ T₄ ≤ 80 µm, and 40 µm ≤ T₅ ≤ 80 µm, thereby further increasing the energy density of the secondary battery 1000.

In some embodiments, referring to FIG. 11 to FIG. 13, the electrode plate 10 further includes a first tab 17. The first tab 17 includes a first portion 171 and a third portion 172, where the first portion 171 is connected to the first metal layer 11, and along the thickness direction, that is, the third direction, of the electrode plate 10, a projection of the third portion 172 does not overlap a projection of the first metal layer 11. For example, the third portion 172 extends outside the first metal layer 11 from the side of the electrode plate 10 in the width direction, that is, the second direction Y. The first tab 17 may transmit a current during charge and discharge of the secondary battery 1000 to the first active material layer 14 or transmit the current of the first active material layer 14 to the outside.

The applicant of this application finds through research that the tab will produce cutting burrs during cutting, an edge portion of the metal layer may have burrs, and after the tab is connected to the metal layer, the edge burrs may be bent towards the metal layer on the other side due to the pressure exerted by the tab. In the embodiments of this application, since the above first metal layer 11 and second metal layer 12 are insulated only by the insulation layer 13, the relatively-short distance between the first metal layer 11 and the second metal layer 12 may lead to short circuits caused by contact between the burrs and the metal layer on the other side.

In order to reduce the above problem, in the embodiments of this application, referring to FIG. 11 to FIG. 13, the electrode plate 10 further includes a first insulation adhesive 17a. The first insulation adhesive 17a is disposed on the surface of the third portion 172 and that faces the second metal layer 12, and the first insulation adhesive 17a is connected to the first metal layer 11. The first insulation adhesive 17a can effectively reduce the contact between the first tab 17 and the second metal layer 12, thereby reducing short circuits. In some other embodiments, the lengths of the first metal layer 11 and the second metal layer 12 may also be set to be less than the length of the insulation layer 13, or the widths of the first metal layer 11 and the second metal layer 12 are set to be less than the width of the insulation layer 13, such that the insulation layer 13 completely insulates the first metal layer 11 from the second metal layer 12, thereby reducing short circuits.

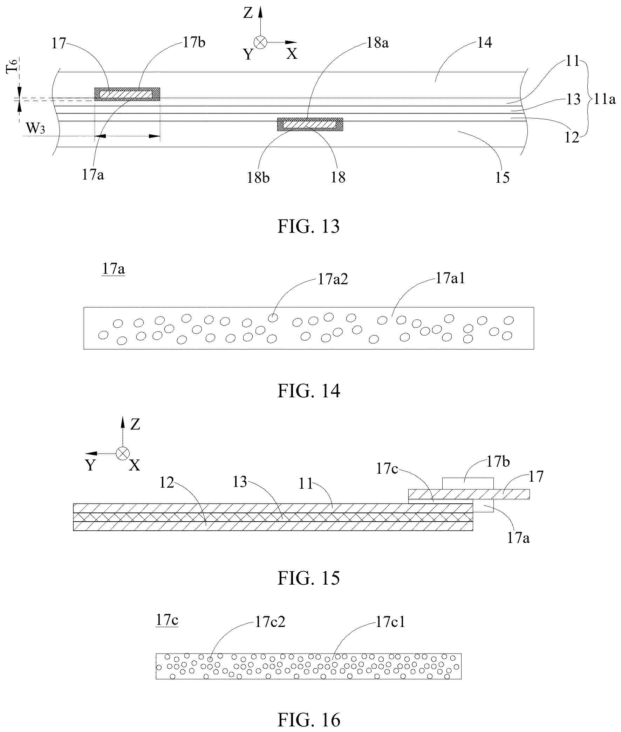

In some embodiments, further referring to FIG. 14, the first insulation adhesive 17a includes a first substrate 17a1. The first substrate 17a1 may be made of at least one of polyethylene (PE), polypropylene (PP), polyphenylene sulfide (PPS), polycarbonate (PPS), or the like, can cover the burrs of the first tab 17, and can insulate the first tab 17 from the second metal layer 12.

Optionally, the first insulation adhesive 17a further includes first insulation portions 17a2. The first insulation portions 17a2 may be filled in the first substrate 17a1. The first insulation portions 17a2 include at least one of aluminum oxide, magnesium oxide, or zirconium oxide. The aluminum oxide, the magnesium oxide, the zirconium oxide, and the like are all materials with a high resistivity. The resistivity can be increased, which is conducive to reducing leakage of a current from the first insulation adhesive 17a and reducing the risk of short circuits inside the secondary battery 1000. Moreover, the first insulation portions 17a2 can improve the toughness and impact resistance of the first insulation adhesive 17a, thereby reducing deformation of the secondary battery 1000 during production, assembly or use. Moreover, each of the above first insulation portions 17a2 has a relatively high melting point and thermal stability, which can reduce the exposure of the first tab 17 caused by softening and deformation of the first insulation adhesive 17a due to a high temperature, thereby reducing short circuits caused by contact between the first tab 17 and the second metal layer 12.

In some embodiments, referring to FIG. 11 to FIG. 13, the electrode plate 10 further includes a third insulation adhesive 17b. The third insulation adhesive 17b is disposed on the surface of the first tab 17 and facing away from the second metal layer 12 and the third insulation adhesive 17b is connected to the first metal layer 11. When the electrode plate 10 is stacked or is stacked and wound, the first tab 17 may directly face the second active material layer 15. By disposing the third insulation adhesive 17b, the second active material layer 15 adjacent to the first tab 17 can be effectively insulated, thereby reducing short circuits caused by contact between the burrs and the second active material layer 15.

In some other embodiments, along the thickness direction, that is, the third direction Z, of the electrode plate 10, a projection of the third insulation adhesive 17b partially overlaps the projection of the first metal layer 11. On the one hand, the bonding area can be increased, thereby improving the bonding strength; and on the other hand, the third insulation adhesive 17b can effectively insulate a part of the first tab 17 on the electrode plate 10, which can reduce short circuits caused by contact between burrs of the part and the second active material layer 15 adjacent thereto.

In some embodiments, along the thickness direction, that is, the third direction Z, of the electrode plate 10, a projection of the first insulation adhesive 17a is located within the projection of the third insulation adhesive 17b. After stacking or winding of the electrode plate 10, the third insulation adhesive 17b may face the second active material layer 15, while the first insulation adhesive 17a is directed to an edge of the second metal layer 12; and the third insulation adhesive 17b needs to cover a larger area, while the first insulation adhesive 17a only needs to effectively insulate the first tab 17 from the edge of the second metal layer 12. Therefore, the size of the first insulation adhesive 17a may be set to be less than that of the third insulation adhesive 17b.

For example, referring to FIG. 11 and FIG. 12, along the width direction, that is, the second direction Y, of the electrode plate 10, the first insulation adhesive 17a has a length of L₃, 0.5 mm ≤ L₃ ≤ 5 mm, preferably, 1 mm ≤ L₃ ≤ 1.5 mm. The length of the third insulation adhesive 17b may be set to be slightly greater than that of the first insulation adhesive 17a, as long as it is ensured that the third insulation adhesive 17b can be partially disposed on the first metal layer 11. For example, along the width direction, that is, the second direction, of the electrode plate 10, the third insulation adhesive 17b has a length of 0.8 mm to 10 mm, preferably, 1.5 mm to 2.5 mm. In the embodiments of this application, by reasonably distributing the amounts of the first insulation adhesive 17a and the third insulation adhesive 17b used, the extension of the insulation adhesives to the active material layers can be reduced.

In some other embodiments, along the length direction, that is, the first direction X, of the electrode plate 10, the width of the first insulation adhesive 17a is greater than the width of the first tab 17, and two sides of the first insulation adhesive 17a in the width direction, that is, the second direction Y, extend beyond the first tab 17. For example, referring to FIG. 11 and FIG. 12, along the length direction, that is, the first direction X, of the electrode plate 10, the first insulation adhesive 17a has a width of W₄, and the first tab 17 has a width of W₅, where 0 ≤ W₄ - W₅ ≤ 1 mm, such that the first tab 17 can be completely insulated from the second metal layer 12, thereby reducing short circuits. Similarly, the width of the third insulation adhesive 17b may also be set to be greater than or equal to the width of the first tab 17, and may be set similar to the width of the first insulation adhesive 17a. For example, the third insulation adhesive 17b has a width of 0 mm to 1 mm. Optionally, two sides of the third insulation adhesive 17b in the width direction, that is, the second direction Y, extend beyond the first tab 17, such that the first tab 17 can be insulated from the second active material layer 15 adjacent thereto.

In some embodiments, referring to FIG. 13, the first insulation adhesive 17a may also be connected to the third insulation adhesive 17b, and a structure that covers a root, that is, a junction to which the edge of the first metal layer 11 is connected, of the first tab 17 can be formed, thereby completely insulating the cutting burrs of the first tab 17.

For the thickness of the first insulation adhesive 17a, the applicant of this application finds through research that if the thickness of the first insulation adhesive 17a is overly small, it may be difficult to effectively cover the burrs; if the thickness is overly large, it may cause the first insulation adhesive 17a to be cast or extend to the first active material layer 14, thus affecting the energy density of the secondary battery 1000. In the embodiments of this application, referring to FIG. 13, along the thickness direction, that is, the third direction Z, of the electrode plate 10, the first insulation adhesive 17a has a thickness of T₆, where 0.03 mm ≤ T₆ ≤ 0.3 mm, which can reduce the impact on the first active material layer 14 while insulating the burrs. Preferably, 0.03 mm ≤ T₆ ≤ 0.08 mm, thereby further reducing the amount of the first insulation adhesive 17a used and insulating the burrs. Based on the same inventive conception, in the embodiments of this application, the thickness of the third insulation adhesive 17b may also be selected from 0.03 mm to 0.3 mm, preferably, 0.03 mm to 0.08 mm.

For the connection between the first tab 17 and the first metal layer 11, the first tab 17 may be connected to the first metal layer 11 by means of welding, boning, or the like. Using welding as an example, welding is conducive to forming firm metal bonding between the first tab 17 and the first metal layer 11, thereby improving the strength of connection between the first tab 17 and the first metal layer 11. However, welding will produce welding burrs, which may come into contact with the second metal layer 12 and cause short circuits. Therefore, in the embodiments of this application, preferably, the first tab 17 is bonded to the first metal layer 11.

Referring to FIG. 11, FIG. 12 and FIG. 15, the electrode plate 10 further includes a first adhesive layer 17c. The first tab 17 is bonded to the first metal layer 11 through the first adhesive layer 17c. The bonding manner will not produce burrs, which can reduce the risk of short circuits. Moreover, bonding enables a stress to be more uniformly distributed on a contact surface between the first tab 17 and the first metal layer 11, thereby reducing the risk of damage and tearing of the electrode plate 10 caused by stress concentration. In addition, a bonding process is simpler and easier to operate than welding, which can simplify the manufacturing process and improve the production efficiency.

In some embodiments, the first adhesive layer 17c may be made of a conductive adhesive. For example, further referring to FIG. 16, the first adhesive layer 17c includes a first bonding portion 17c1 and a first conductive portion 17c2. The first conductive portion 17c2 is filled in the first bonding portion 17c1. The first adhesive layer 17c can achieve conduction between the first tab 17 and the first metal layer 11. For example, the first bonding portion 17c1 includes at least one of epoxy resin (EP), acrylic resin (ACR), polyimide (PI), or the like. The above materials have not only good bonding performance, but also good chemical corrosion resistance and high temperature resistance, which can improve the strength of connection between the first tab 17 and the first metal layer 11 and prolong the service life. The first conductive portion 17c2 includes at least one of silver, copper, nickel, or carbon nanotubes, which can improve the electrical conductivity of the first adhesive layer 17c, reduce the resistance between the first tab 17 and the first metal layer 11, and improve the current-carrying capability.

For the width of the first adhesive layer 17c, the applicant of this application finds through research that if the width of the first adhesive layer 17c is overly small, it may affect the performance of bonding between the first tab 17 and the first metal layer 11. If the width of the first adhesive layer 17c is overly large, it may cover part of the first active material layer 14, affecting the energy density of the secondary battery 1000, and it may also cause adhesive overflow, leading to short circuits caused by contact with the second active material layer 15 or the second metal layer 12. In the embodiments of this application, referring to FIG. 12, along the length direction, that is, the first direction X, of the electrode plate 10, the first adhesive layer 17c has a width of W₃, where 3 mm ≤ W₃ ≤ 10 mm. While the performance of bonding between the first tab 17 and the first metal layer 11 is improved, covering of the first active material layer 14 can be reduced, and adhesive overflow is reduced. Further, 3 mm ≤ W₃ ≤ 6 mm.

In some embodiments, the electrode plate 10 further includes a second tab 18 and a second insulation adhesive 18a. Referring to FIG. 11 to FIG. 13, Similar to the above first tab 17 and first insulation adhesive 17a, The second tab 18 includes a second portion 181 and a fourth portion 182, where the second portion 181 is connected to the second metal layer 12, and along the thickness direction, that is, the third direction Z, of the electrode plate 10, a projection of the fourth portion 182 does not overlap a projection of the second metal layer 12. For example, the fourth portion 182 extends from the side of the electrode plate 10 in the width direction, that is, the second direction Y. The second insulation adhesive 18a is disposed on the surface of the fourth portion 182 and that faces the first metal layer 11, and the second insulation adhesive 18a is connected to the second metal layer 12. The contact between cutting burrs of the second tab 18 and the first metal layer 11 as well as between burrs of the second metal layer 12 and the first metal layer 11 can be effectively reduced, thereby reducing short circuits.

In some embodiments, the electrode plate 10 further includes fourth insulation adhesives 18b. Referring to FIG. 11 and FIG. 13, the fourth insulation adhesive 18b is disposed on the surface of the second tab 18 and facing away from the first metal layer 11, and the fourth insulation adhesive 18b is connected to the second metal layer 12. When the electrode plate 10 is stacked or is stacked and wound, the second tab 18 may face the first active material layer 14. By disposing the fourth insulation adhesive 18b, the risk of short circuits caused by the contact with the first active material layer 14 adjacent to the second tab 18 can be reduced.

In some other embodiments, along the thickness direction, that is, the third direction Z, of the electrode plate 10, a projection of the fourth insulation adhesive 18b partially overlaps the projection of the second metal layer 12. On the one hand, the bonding area can be increased, thereby improving the bonding strength; and on the other hand, the fourth insulation adhesive 18b can effectively insulate a part of the second tab 18 on the electrode plate 10, thereby reducing short circuits caused by contact between burrs of the part and the first active material layer 14 adjacent thereto. Optionally, the second insulation adhesive 18a may also be connected to the fourth insulation adhesive 18b, and a structure that covers a root, that is, a junction to which the edge of the second metal layer 12 is connected, of the second tab 18 can be formed, thereby completely insulating cutting burrs of the second tab 18.

The second tab 18 may be connected to the second metal layer 12 by means of welding, bonding, or the like. In the embodiments of this application, the electrode plate 10 further includes second adhesive layers 18c. The second tab 18 is bonded to the second metal layer 12 through the second adhesive layer 18c. The bonding manner will not produce burrs, which can reduce the risk of short circuits.

In some embodiments, referring to FIG. 11 to FIG. 13, along the thickness direction, that is, the third direction Z, of the electrode plate 10, a projection of the first tab 17 is located outside a projection of the second tab 18. That is, the first tab does not overlap the second tab, which can reduce the risk of short circuits caused by contact between the first tab 17 and the second tab 18. A plurality of first tabs 17 and a plurality of second tabs 18 may be disposed, and it is ensured that the first tabs 17 and the second tabs 18 do not overlap in the thickness direction, that is, the third direction Z, of the electrode plate 10.

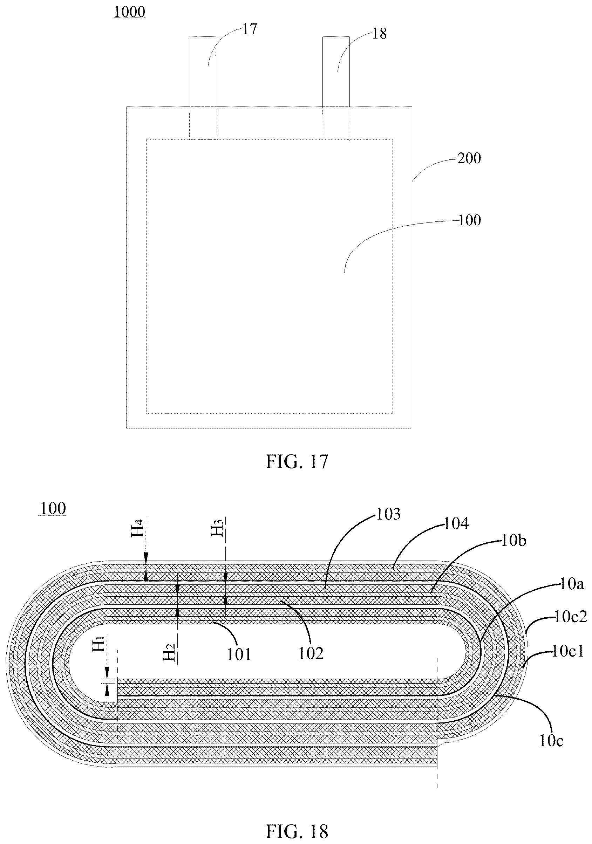

In a second aspect, this application further provides a secondary battery 1000. Referring to FIG. 17, the secondary battery 1000 includes a housing 200 and an electrode assembly 100 disposed within the housing 200. The electrode assembly 100 includes a separator 20 and the electrode plate 10 according to any one of the embodiments in the first aspect. The first tab 17 and the second tab 18 extend from the inside of the housing 200 to the outside thereof and are configured to achieve conduction with an external circuit. In some embodiments, the first tab 17 and the second tab 18 may each include an adapter (not shown in the drawing) and extend out of the housing 200 through the adapter.

In some embodiments, the electrode assembly 100 may be of a jelly-roll structure. Referring to FIG. 4, the electrode assembly 100 includes a separator 20 and a single electrode plate 10. The separator 20 and the single electrode plate 10 are stacked and then wound for several circles to form a jelly-roll electrode assembly 100, which can simplify the manufacturing process, and when the single electrode plate 10 is wound, the problem of misalignment caused by stacking or winding is avoided, which can reduce or eliminate the need for overhang regions, thereby increasing the energy density of the secondary battery 1000.

In some other embodiments, referring to FIG. 9, the secondary battery 1000 further includes an isolation layer 16. The disposing of the isolation layer 16 enables the single electrode plate 10 to be wound into the electrode assembly 100. There is no need to dispose the separator 20, and thus there is no stacking and winding operation of the separator 20, which can further simplify the manufacturing process and further reduce or eliminate the need for the overhang regions, thereby increasing the energy density of the secondary battery 1000.

In some embodiments, referring to FIG. 18, along a winding direction of the electrode plate 10, the electrode plate 10 includes a first segment 10a, a second segment 10b, and a third segment 10c. The first segment 10a forms an innermost electrode plate 10 of the electrode assembly 100, the third segment 10c forms an outermost electrode plate 10 of the electrode assembly 100, and the second segment 10b is connected between the first segment 10a and the third segment 10c.

The first segment 10a includes a first inner active material layer 101 facing the winding center, the second segment 10b includes a second inner active material layer 102 facing the winding center and a second outer active material layer 103 oriented away from the winding center, and the third segment 10c includes a third outer active material layer 104 oriented away from the winding center. Along the thickness direction of the electrode plate 10, the first inner active material layer 101 has a thickness of H₁, the second inner active material layer 102 has a thickness of H₂, the second outer active material layer 103 has a thickness of H₃, and the third outer active material layer 104 has a thickness of H₄. H₁<H_{2;} and/or, H₄ < H₃.

Along the thickness direction of the electrode plate 10, both sides of the second inner active material layer 102 are provided with corresponding active material layers of opposite polarities. Since the above first pores 111, second pores 121, and third pores 131 are configured to transmit ions, which enables the second inner active material layer 102 to react with the active material layers of opposite polarities on both sides thereof, the thickness of the second inner active material layer 102 can be set to be larger. However, only the side of the first inner active material layer 101 and facing away from the winding center is provided with an active material layer of an opposite polarity, therefore, the thickness of the first inner active material layer 101 may be set to be less than the thickness of the second inner active material layer 102, such that the active material layers can completely react, thereby increasing the energy density of the secondary battery 1000. For example, (1/3) H₂ ≤ H₁ ≤ (2/3) H₂. Further, the thickness of the first inner active material layer 101 may be set to about half of the thickness of the second inner active material layer 102.

Based on the same inventive conception, the thickness of the third outer active material layer 104 may be set to be less than the thickness of the second outer active material layer 103, thereby further increasing the energy density of the secondary battery 1000. For example, (1/3) H₃ ≤ H₄ ≤ (2/3) H₃. Further, the thickness of the third outer active material layer 104 may be set to about half of the thickness of the second outer active material layer 103.

In some embodiments, a part of the electrode plate 10 located at an outermost circle of the electrode assembly 100 includes a first surface 10c1 oriented away from the winding center. The separator 20 may extend to the first surface 10c1, and can reduce falling of the outermost active material layer, reduce short circuits caused by contact between the electrode assembly 100 and the housing 200, and reduce the corrosion of the electrolyte solution to the electrode plate 10.

In some other embodiments, referring to FIG. 18, the secondary battery 1000 further includes a first finishing adhesive 10c2. The first finishing adhesive 10c2 is disposed on the first surface 10c1. The first finishing adhesive 10c2 can reduce falling of the outermost active material layer, reduce the short circuits caused by the contact between the electrode assembly 100 and the housing 200, and reduce the corrosion of the electrolyte solution to the electrode plate 10. The first finishing adhesive 10c2 may be a hot melt adhesive and/or a pressure-sensitive adhesive. The first finishing adhesive 10c2 may be bonded between the housing 200 and the electrode assembly 100, thereby improving the integrity of the secondary battery 1000 and reducing shifting of the electrode assembly 100 inside the housing 200. Optionally, the first surface 10c1 may also be provided with both the first finishing adhesive 10c2 and the separator 20. For example, part of the first surface 10c1 is provided with the separator 20, the other part of the first surface 10c1 is provided with the first finishing adhesive 10c2, and the first finishing adhesive 10c2 may be directly and partially bonded to the separator 20.

In some other embodiments, when the electrode plate 10 includes the isolation layer 16, the isolation layer 16 may form an outermost layer of the electrode assembly 100; or, the isolation layer 16 is disposed on the foregoing first surface 10c1, and the first finishing adhesive 10c2 and the separator 20 do not need to be disposed, which can further simplify the manufacturing step. After the electrode plate 10 includes the isolation layer 16, the separator 20 or the first finishing adhesive 10c2 may also be disposed on the isolation layer 16, which can further reduce the contact between the electrode assembly 100 and the housing 200, and reduce the corrosion of the electrode plate 10.

In some embodiments, referring to FIG. 5, the electrode assembly 100 may be of a laminated structure. A plurality of electrode plates 10 and a plurality of separators are alternately stacked in sequence. The insulation layers 13 of the electrode plates 10 act as the separators 20. After stacking of the electrode plates 10, the amount of the separators 20 used and the stacking step of the separators 20 can be reduced, which can not only simplify the manufacturing process, but also increase the space utilization rate, thereby increasing the energy density of the secondary battery 1000.

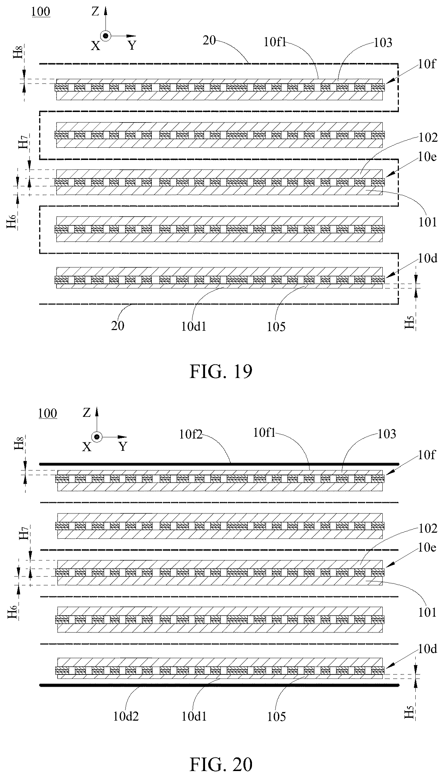

In some other embodiments, a Z-shaped separator 20 may also be used. For example, referring to FIG. 19, the plurality of electrode plates 10 are stacked in sequence, and a single separator 20 is threaded between two adjacent electrode plates 10 in sequence. The amount of the separator 20 used can also be reduced, which can not only simplify the manufacturing process, but also increase the space utilization rate, thereby increasing the energy density of the secondary battery 1000.

In some embodiments, referring to FIG. 19, the plurality of electrode plates 10 includes a first outer electrode plate 10d, an inner electrode plate 10e, and a second outer electrode plate 10f. Along a stacking direction, that is, the third direction Z, the first outer electrode plate 10d and the second outer electrode plate 10f are outermost electrode plates on the two sides of the electrode assembly 100, respectively, and the inner electrode plate 10e is located between the first outer electrode plate 10d and the second outer electrode plate 10f. The first outer electrode plate 10d includes a first outer active material layer 105 oriented away from the inner electrode plate 10e. The inner electrode plate 10e includes a first inner active material layer 101 facing the first outer electrode plate 10d and a second inner active material layer 102 facing the second outer electrode plate 10f. The second outer electrode plate 10f includes a second outer active material layer 103 oriented away from the inner electrode plate 10e. In the embodiments, along the stacking direction, that is, the third direction Z, the first outer active material layer 105 has a thickness of H₅, the first inner active material layer 101 has a thickness of H₆, the second inner active material layer 102 has a thickness of H₇, and the second outer active material layer 103 has a thickness of H₈. H₅ < H₆; and/or, H₈ < H₇.

Along the thickness direction, that is, the third direction Z, of the electrode plate 10, both sides of the first inner active material layer 101 are provided with corresponding active material layers of opposite polarities. Since the above first pores 111, second pores 121, and third pores 131 are configured to transmit ions, which enables the first inner active material layer 101 to react with the active material layers of opposite polarities on both sides thereof, the thickness of the first inner active material layer 101 can be set to be larger. However, only one side of the first outer active material layer 105 is provided with an active material layer of an opposite polarity, therefore, the thickness of the first outer active material layer 105 may be set to be less than the thickness of the first inner active material layer 101, such that the active material layers can completely react, thereby increasing the utilization rate of active materials and increasing the energy density of the secondary battery 1000. For example, (1/3) H₆ ≤ H5 ≤ (2/3) H₆. Further, the thickness of the first inner active material layer 101 may be set to about half of the thickness of the second inner active material layer 102.

Based on the same inventive conception, the thickness of the second outer active material layer 103 may be set to be less than the thickness of the second inner active material layer 102, thereby further increasing the energy density of the secondary battery 1000. For example, (1/3) H₇ ≤ H₈ ≤ (2/3) H₇. Further, the thickness of the third outer active material layer 104 may be set to about half of the thickness of the third outer active material layer 103.

In some embodiments, the above plurality of electrode plates include a first outer electrode plate 10d and a second outer electrode plate 10f. Along the stacking direction, that is, the third direction Z, the first outer electrode plate 10d and the second outer electrode plate 10f are outermost electrode plates 10 on the two sides of the electrode assembly 100, respectively. The first outer electrode plate 10d includes a second surface 10d1 oriented away from the second outer electrode plate 10f, and the second outer electrode plate 10f includes a third surface 10f1 oriented away from the first outer electrode plate 10d. The second surface 10d1 is provided with the separator 20, and the third surface 10f1 is provided with the separator 20, which can reduce falling of the outermost active material layer, reduce the short circuits caused by the contact between the electrode assembly 100 and the housing 200, and reduce the corrosion of the electrolyte solution to the electrode plates 10.

In some other embodiments, referring to FIG. 20, the secondary battery 1000 further includes a second finishing adhesive 10d2 and a third finishing adhesive 10f2, where the second surface 10d1 is provided with the second finishing adhesive 10d2, and the third surface 10f1 is provided with the third finishing adhesive 10f2. The second finishing adhesive 10d2 and the third finishing adhesive 10f2 can reduce falling of the outermost active material layer, reduce the short circuits caused by the contact between the electrode assembly 100 and the housing 200, and reduce the corrosion of the electrolyte solution to the electrode plates 10. Both the second finishing adhesive 10d2 and the third finishing adhesive 10f2 may be a hot melt adhesive and/or a pressure-sensitive adhesive. The second finishing adhesive 10d2 and/or the third finishing adhesive 10f2 may also be bonded to the housing 200, thereby improving the integrity of the secondary battery 1000 and reducing shifting of the electrode assembly 100 inside the housing 200.

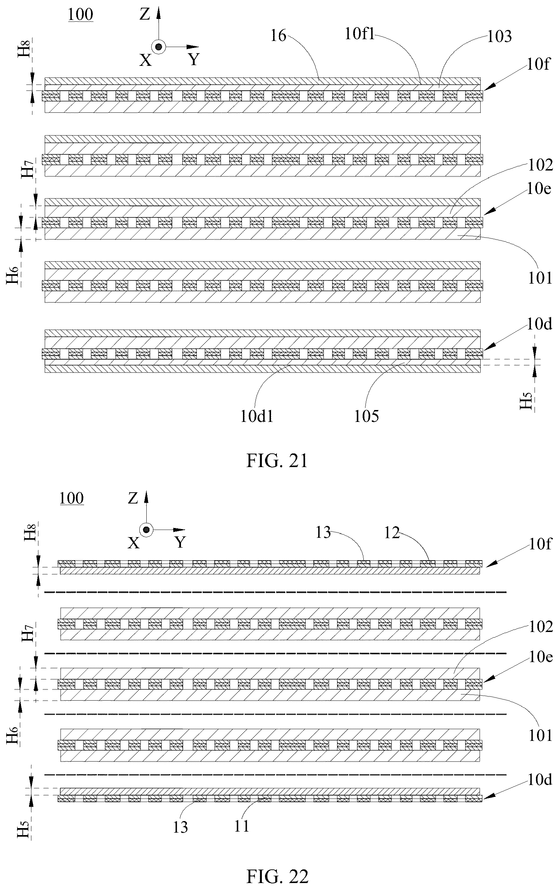

When the electrode plate 10 includes the isolation layer 16, referring to FIG. 21, the outermost layers of the two sides of the electrode assembly 100 in the stacking direction, that is, the third direction Z, may also be the isolation layers 16; or the second surface 10d1 and the third surface 10f1 are provided with the isolation layers 16, and the second finishing adhesive 10d2, the third finishing adhesive 10f2, or the separator 20 do not need to be disposed, which can further simplify the step. Alternatively, the isolation layer 16 and the separator 20 are disposed, thereby reducing the contact between the electrode assembly 100 and the housing 200; still alternatively, the isolation layer 16, the separator 20, and the second finishing adhesive 10d2, or the third finishing adhesive 10f2 are all disposed. On the one hand, the electrode assembly 100 and the housing are bonded, and on the other hand, the electrode plates 10 are protected, thereby reducing tearing of the electrode plates 10 and reducing corrosion of the electrode plates 10.

In some embodiments, referring to FIG. 22, the electrode assembly 100 further includes a first outer electrode plate 10d and a second outer electrode plate 10f. Along the stacking direction, that is, the third direction Z, the first outer electrode plate 10d and the second outer electrode plate 10f are outermost electrode plates 10 on the two sides of the electrode assembly 100, respectively. The first outer electrode plate 10d includes the insulation layer 13. Only the surface of the insulation layer 13 and that faces the second outer electrode plate 10f is provided with the first metal layer 11 or the second metal layer 12. The metal layer on one side of the above electrode plate 10 may be directly removed to expose the insulation layer 13 and thus to directly insulate the housing 200 through the insulation layer 13, which can reduce the short circuits caused by the contact between the electrode assembly 100 and the housing 200, and reduce the corrosion of the electrolyte solution to the electrode plate 10.

Based on the same inventive concept, the second outer electrode plate 10f includes the insulation layer 13. Only the surface of the insulation layer 13 and that faces the first outer electrode plate 10d is provided with the first metal layer 11 or the second metal layer 12, which can further reduce the short circuits caused by the contact between the electrode assembly 100 and the housing 200, and reduce the corrosion of the electrolyte solution to the electrode plate 10.

In some other embodiments, when the outermost layers are the insulation layers 13, referring to FIG. 22, the electrode plates 10 include the inner electrode plate 10e. Along the stacking direction, that is, the third direction Z, the inner electrode plate 10e is located between the first outer electrode plate 10d and the second outer electrode plate 10f. The inner electrode plate 10e includes a first inner active material layer 101 facing the first outer electrode plate 10d and a second inner active material layer 102 facing the second outer electrode plate 10f. The first outer electrode plate 10d includes the first outer active material layer 105 facing the inner electrode plate 10e, and the second outer electrode plate 10f includes the second outer active material layer 103 facing the inner electrode plate 10e. Along the stacking direction, that is, the third direction Z, the first outer active material layer 105 has a thickness of H₅, the first inner active material layer 101 has a thickness of H₆, the second inner active material layer 102 has a thickness of H₇, and the second outer active material layer 103 has a thickness of H₈. H₅ < H₇; and/or, H₈ < H₆. It can be convenient for the active material layers to completely react, thereby increasing the utilization rate of active materials and increasing the energy density of the secondary battery 1000.

In a third aspect, this application further provides an electronic device. The electronic device includes the secondary battery 1000 according to any one of the embodiments in the second aspect. The electronic device in the embodiments of this application is not particularly limited and may be any electronic device known in the prior art. For example, the electronic device includes, but is not limited to, bluetooth earphones, a mobile phone, a tablet, a notebook computer, an electric toy, an electric tool, an electric power cart, an electric vehicle, a ship, a spacecraft, or the like. The electric toys may include fixed or mobile electric toys, for example, game machines, electric car toys, electric ship toys, electric plane toys and the like, and the spacecraft may include airplanes, rockets, space shuttles and spaceships and the like.

### Experiment 1: lithium plating test of lithium-ion battery

### Embodiment A1:

### <Preparing a positive electrode plate>:

Selecting a 5 µm-thick polyimide (PET) insulation layer, respectively sputtering a first metal layer of an aluminum foil and a second metal layer of a copper foil on two surfaces of the insulation layer in a thickness direction to form a composite current collector, and forming through pores, that is, the part located on the first metal layer being first pores, the part located on the second metal layer being second pores, and the part located on the insulation layer being third pores, that run through the composite current collector in a thickness direction of the composite current collector through a laser drilling process, where the aluminum foil has a thickness of 1.5 µm, and the copper foil has a thickness of 1.5 µm.

Mixing lithium cobalt oxide as the positive active material, acetylene black as the positive conductive agent, and polyvinylidene difluoride (PVDF, having a weight-average molecular weight of 5×10⁵) as the positive electrode binder at a mass ratio of 94: 3: 3, adding N-methyl-pyrrolidone (NMP) as a solvent, and stirring the mixture with a vacuum mixer until a homogeneous positive electrode slurry in which the solid content is 75 wt% is obtained. Uniformly and continuously coating the positive electrode slurry on a surface of the aluminum foil, and drying at 110° C to obtain the electrode plate with a single side coated with the positive active material layer.

Mixing graphite powder as the negative active material, silicon powder, conductive carbon black (Super P) as the conductive agent, and styrene-butadiene rubber (SBR) as the binder at a mass ratio of 87: 10.5: 1: 1.5, then adding deionized water as a solvent to prepare a negative electrode slurry in which the solid content is 50%, and stirring the slurry uniformly. Uniformly and continuously coating the negative electrode slurry on a surface of the copper foil, and drying to obtain the electrode plate with one side being the positive active material layer and the other side being the negative active material layer. The side of the negative active material layer in a length direction extends beyond the positive active material layer by L₁, where L₁ = 0.5 mm; and the other side of the negative active material layer in the length direction is flush with the positive active material layer. The side of the negative active material layer in a width direction extends beyond the positive active material layer by W₁, where W₁ = 0.5 mm; and the other side of the negative active material layer in the width direction is flush with the positive active material layer.

### <Preparing an electrolyte solution>

In an atmosphere of dry argon, mixing ethylene carbonate, ethyl methyl carbonate, and diethyl carbonate at a mass ratio of 30: 50: 20 to obtain an organic solution, then adding lithium hexafluorophosphate as a lithium salt into the organic solvent to dissolve, and mixing well to obtain the electrolyte solution in which the concentration of the lithium salt is 1.15 mol/L.

### <Connecting tabs>

Cleaning a positive tab groove in the positive active material layer through a laser cleaning process, and cleaning a negative tab groove in the negative active material layer. Adding copper and carbon nanotube conductive particles into epoxy resin to form the first adhesive layer and the second adhesive layer, bonding an aluminum-sheet tab to the first metal layer through the first adhesive layer, and bonding a nickel-sheet tab to the second metal layer through the second adhesive layer.

Selecting polyethylene as the first substrate, filling an aluminum oxide insulating material into the first substrate to form the first insulation adhesive, and similarly, preparing the second insulation adhesive, the third insulation adhesive, and the fourth insulation adhesive. Disposing the first insulation adhesive on the side of a positive tab and that faces the second metal layer, and disposing the third insulation adhesive on the side of the positive tab and facing away from the second metal layer. Disposing the second insulation adhesive on the side of a negative tab and that faces the first metal layer, and disposing the fourth insulation adhesive on the side of the negative tab and facing away from the first metal layer.

### <Preparing a lithium-ion battery>

Winding the above prepared electrode plate to obtain the electrode assembly, and hot-pressing the electrode assembly at a pressure of 5 MPa and a temperature of 65 °C for 10s. Putting the electrode assembly into an aluminum laminated film housing, dehydrating entirety at 80 °C, then injecting the electrolyte solution and performing sealing to form the lithium-ion battery.

Relevant parameters in Embodiment A1 to Embodiment A10 and Comparative Embodiment A1 to Comparative Embodiment A2 are shown in the following Table 1. In Comparative Embodiment A1 to Comparative Embodiment A2, a conventional separator, positive electrode plate, separator, and negative electrode plate are used to be stacked and wound. In Embodiment A6 to Embodiment A10, the side of the negative active material layer and facing away from the insulation layer is provided with an isolation layer of aluminum oxide, which has a thickness of 10 µm.

### Method for testing lithium plating:

Putting the secondary battery in an environment in which the test temperature is 25°C to stand for 30 min, and performing step charging according to the following charging steps until the voltage reaches 4.5 V:
(1) charging at a constant current of 4 C until the voltage reaches 4.2 V;
(2) charging at a constant current of 3.5 C until the voltage reaches 4.33 V;
(3) charging at a constant current of 2.5 C until the voltage reaches 4.38 V;
(4) charging at a constant current of 2 C until the voltage reaches 4.5 V; and
(5) charging at a constant current of 1.5 C until the voltage reaches 4.5 V, and charging at a constant voltage until the current reaches 0.02C.

Standing for 10 min, and then discharging according to the following steps:
Discharging at a direct current of 0.2 C until the voltage reaches 3 V.

Regarding the above charging and discharging process as one cycle. When the battery is at a fully charged, with the maximum voltage designed for the battery being 4.5V, at the end of 100th cycle, disassembling the secondary battery to obtain an electrode plate. If it is found that the area of lithium deposited on the surface of the electrode plate is greater than or equal to 10 mm², it is determined as lithium plating. Testing ten batteries in each group. If the number of lithium plating is X, the lithium plating rate is X/10.

**Table 1**

| Case | Structure of electrode assembly | First pores, second pores and third pores | Isolation layer | L₁ (mm) | W₁ (mm) | Lithium plating rate |
|---|---|---|---|---|---|---|
| Comparative Embodiment A1 | Jelly-roll | none | none | 0.5 | 0.5 | 5/10 |
| Comparative Embodiment A2 | Jelly-roll | none | none | 0.3 | 0.3 | 6/10 |
| Embodiment A1 | Jelly-roll | Yes | none | 0.5 | 0.5 | 2/10 |
| Embodiment A2 | Jelly-roll | Yes | none | 0.3 | 0.3 | 2/10 |
| Embodiment A3 | Jelly-roll | Yes | none | 0.2 | 0.2 | 3/10 |
| Embodiment A4 | Jelly-roll | Yes | none | 0.1 | 0.1 | 3/10 |
| Embodiment A5 | Jelly-roll | Yes | none | 0 | 0 | 4/10 |
| Embodiment A6 | Jelly-roll | Yes | Yes | 0.5 | 0.5 | 0/10 |
| Embodiment A7 | Jelly-roll | Yes | Yes | 0.3 | 0.3 | 1/10 |
| Embodiment A8 | Jelly-roll | Yes | Yes | 0.2 | 0.2 | 1/10 |
| Embodiment A9 | Jelly-roll | Yes | Yes | 0.1 | 0.1 | 1/10 |
| Embodiment A10 | Jelly-roll | Yes | Yes | 0 | 0 | 2/10 |

According to the above Table 1, in combination with Embodiment A1 to Embodiment A10 and Comparative Embodiment A1 to Comparative Embodiment A2, it can be seen that for the jelly-roll electrode assembly, when the first pores, the second pores, and the third pores for transmitting ions are disposed in the composite current collector, and the metal layers on the two sides of the composite current collector are provided with the first active material layer and the second active material layer of opposite polarities, the risk of lithium plating of the lithium-ion battery can be significantly reduced. That is because, during coating, the positive active material layer and the negative active material layer are located on the two sides of the single electrode plate, respectively. During coating, symmetrical coating of the positive active material layer and the negative active material layer may be adopted. Compared with traditional coating of active materials on different electrode plates, misalignment between the positive active material layer and the negative active material layer can be reduced, and overhang regions can be reduced while the risk of lithium plating is reduced. In addition, since the positive active material layer and the negative active material layer are located on the two sides of the single electrode plate, respectively, when the electrode assembly is prepared, only the single electrode plate needs to be wound, which can simplify the manufacturing process. When the single electrode plate is wound, the problem of misalignment between a positive electrode plate and a negative electrode plate when they are stacked and wound is avoided, which can reduce or eliminate the need for the overhang regions, thereby increasing the energy density of the secondary battery.

In combination with Embodiment A6 to Embodiment A10, when the first pores, the second pores, and the third pores for transmitting ions are disposed in the composite current collector and the isolation layer is disposed, the risk of lithium plating can be further reduced. That is because, the isolation layer may define that the ions are transmitted between the first pores, the second pores, and the third pores, such that lithium ions deintercalated from the active material layer on one side of the electrode plate can be intercalated into the active material layer on the other side of the electrode plate all the time, and the lithium ions deintercalated from the active material layer can thus be intercalated into the negative active material layer all the time, which can not only reduce the problem of lithium plating, but also reduce or even eliminate the overhang regions.

Relevant parameters in Embodiment B1 to Embodiment B10 and Comparative Embodiment B1 to Comparative Embodiment B2 are shown in the following Table 2. The electrode assembly of the laminated structure is adopted in Embodiment B1 to Embodiment B10 and Comparative Embodiment B1 to Comparative Embodiment B2.

**Table 2**

| Case | Structure of electrode assembly | First pores, second pores and third pores | Isolation layer | L₁ (mm) | W₁ (mm) | Lithium plating rate |
|---|---|---|---|---|---|---|
| Comparative Embodiment B1 | Laminated | none | none | 0.5 | 0.5 | 6/10 |
| Comparative Embodiment B2 | Laminated | none | none | 0.3 | 0.3 | 7/10 |
| Embodiment B1 | Laminated | Yes | none | 0.5 | 0.5 | 2/10 |
| Embodiment B2 | Laminated | Yes | none | 0.3 | 0.3 | 3/10 |
| Embodiment B3 | Laminated | Yes | none | 0.2 | 0.2 | 3/10 |
| Embodiment B4 | Laminated | Yes | none | 0.1 | 0.1 | 3/10 |
| Embodiment B5 | Laminated | Yes | none | 0 | 0 | 4/10 |
| Embodiment B6 | Laminated | Yes | Yes | 0.5 | 0.5 | 0/10 |
| Embodiment B7 | Laminated | Yes | Yes | 0.3 | 0.3 | 1/10 |
| Embodiment B8 | Laminated | Yes | Yes | 0.2 | 0.2 | 2/10 |
| Embodiment B9 | Laminated | Yes | Yes | 0.1 | 0.1 | 2/10 |
| Embodiment B10 | Laminated | Yes | Yes | 0 | 0 | 3/10 |

According to the above Table 2, in combination with Embodiment B1 to Embodiment B10 and Comparative Embodiment B1 to Comparative Embodiment B2, it can be seen that for the Laminated electrode assembly, when the first pores, the second pores, and the third pores for transmitting ions are disposed in the composite current collector, and the metal layers on the two sides of the composite current collector are provided with the first active material layer and the second active material layer of opposite polarities, the risk of lithium plating can also be significantly reduced. That is because, when the plurality of single-type electrode plates are stacked, lithium ions deintercalated from the positive active material layer on one side of each electrode plate can be intercalated into the negative active material layer on the other side of the electrode plate, such that the lithium ions deintercalated from the positive active material layer can be intercalated into the negative active material layer all the time, which can not only reduce the problem of lithium plating, but also reduce the overhang regions, thereby increasing the energy density of the secondary battery.

When the first pores, the second pores, and the third pores for transmitting ions are disposed in the composite current collector and the isolation layer is disposed, the risk of lithium plating can be further reduced. That is because, the isolation layer may define that the ions are transmitted between the first pores, the second pores, and the third pores, such that lithium ions deintercalated from the active material layer on one side of the electrode plate can be intercalated into the active material layer on the other side of the electrode plate all the time, and the lithium ions deintercalated from the active material layer can thus be intercalated into the negative active material layer all the time, which can not only reduce the problem of lithium plating, but also reduce or even eliminate the overhang regions.

In combination with the above Table 1 and Table 2, in the embodiments of this application, L₁ ≤ 0.5 mm, and W₁ ≤ 0.5 mm may be selected. Further, L₁ ≤ 0.3 mm, and W₁ ≤ 0.3 mm may be selected. L₁ ≤ 0.1 mm, and W₁ ≤ 0.1 mm may further be selected. Or even L₁ = 0 mm, and W₁ = 0 mm.

Finally, it is hereby noted that: the foregoing embodiments are merely intended to illustrate technical solutions of this application rather than to limit this application. Under the thought of this application, the technical features in the foregoing embodiments or different embodiments may also be combined, steps may be implemented in any order, and there are various changes in different aspects of this application as described above, which are not provided in detail for the sake of brevity. Although this application is illustrated in detail with reference to the foregoing embodiments, a person of ordinary skill in the art shall understand that modifications may still be made to the technical solutions described in the foregoing embodiments or equivalent replacements may be made to some technical features thereof. These modifications or replacements do not make the essence of the corresponding technical solution depart from the scope of the technical solutions of the embodiments of this application.

## Claims

1. An electrode plate (10) , comprising a first metal layer (11), a second metal layer (12), and an insulation layer (13) disposed between the first metal layer (11) and the second metal layer (12), wherein the first metal layer (11) is provided with a plurality of first pores, the second metal layer (12) is provided with a plurality of second pores, and the insulation layer (13) is provided with a plurality of third pores, and the first pores, the second pores, and the third pores being configured to transmit ions;
the electrode plate (10) comprises a first tab (17) and a first insulation adhesive (17a), wherein the first tab (17) comprises a first portion and a third portion connected to each other, the first portion being connected to the first metal layer (11), and along a thickness direction of the electrode plate (10) , a projection of the third portion being located outside a projection of the first metal layer (11) ; and the first insulation adhesive (17a) is disposed on a surface of the third portion and that faces the second metal layer (12), and the first insulation adhesive (17a) is connected to the first metal layer (11) ; and
a first active material layer (14) is disposed on a surface of the first metal layer (11) and facing away from the insulation layer (13), and a second active material layer (15) is disposed on a surface of the second metal layer (12) and facing away from the insulation layer (13), the first active material layer (14) and the second active material layer (15) being of opposite polarities.

2. The electrode plate (10) according to claim 1, wherein the electrode plate (10) comprises a first adhesive layer (17c), the first tab (17) being bonded to the first metal layer (11) through the first adhesive layer (17c).

3. The electrode plate (10) according to claim 2, wherein the first adhesive layer (17c) comprises a first bonding portion and a first conductive portion, the first conductive portion being filled in the first bonding portion;
the first bonding portion comprises at least one of epoxy resin, acrylic resin, or polyimide; and/or, the first conductive portion comprises at least one of silver, copper, nickel, or carbon nanotubes.

4. The electrode plate (10) according to any one of claims 1 to 3, wherein the first insulation adhesive (17a) comprises a first substrate (17a1) and first insulation portions, the first insulation portions being disposed in the first substrate (17a1); the first substrate (17a1) comprises at least one of polyethylene, polypropylene, polyphenylene sulfide, or polycarbonate; and/or, the first insulation portions comprise at least one of aluminum oxide, magnesium oxide, or zirconium oxide; or
the electrode plate (10) comprises a third insulation adhesive (17b), the third insulation adhesive (17b) being disposed on a surface of the first tab (17) and facing away from the second metal layer (12), and the third insulation adhesive (17b) being connected to the first metal layer (11) .

5. The electrode plate (10) according to claim 4, wherein along the thickness direction of the electrode plate (10), a projection of the third insulation adhesive (17b) partially overlaps the projection of the first metal layer (11) ; and/or, along the thickness direction of the electrode plate (10), a projection of the first insulation adhesive (17a) is located within the projection of the third insulation adhesive (17b).

6. The electrode plate (10) according to claim 2 or 3, wherein along a length direction of the electrode plate (10), the first adhesive layer (17c) has a width of W₃, wherein 3 mm ≤ W₃ ≤ 10 mm.

7. The electrode plate (10) according to claim 6, wherein 3 mm ≤ W₃ ≤ 6 mm; or
along the length direction of the electrode plate (10), the first insulation adhesive (17a) has a width of W₄, and the first tab (17) has a width of W₅, wherein 0 ≤ W₄ - W₅ ≤ 1 mm.

8. The electrode plate (10) according to claim 1, wherein along a width direction of the electrode plate (10), the first insulation adhesive (17a) has a length of L₃, wherein 0.5 mm ≤ L₃ ≤ 5 mm, or
along the thickness direction of the electrode plate (10) , the first insulation adhesive (17a) has a thickness of T₆, wherein 0.03 mm ≤ T₆ ≤ 0.3 mm .

9. The electrode plate (10) according to claim 8, wherein 1 mm ≤ L₃ ≤ 1.5 mm.

10. The electrode plate (10) according to claim 8, wherein in 0.03 mm ≤ T₆ ≤ 0.08 mm.

11. The electrode plate (10) according to claim 1, wherein the electrode plate (10) comprises a second tab (18); along the thickness direction of the electrode plate (10), a projection of the first tab (17) is located outside a projection of the second tab (18).

12. The electrode plate (10) according to claim 1, wherein the first active material layer (14) comprises a first region (141), a side of the first region (141) in a length direction of the electrode plate (10) extending beyond the second active material layer (15), and the first region (141) having a length of L₁, wherein L₁ ≤ 0.5 mm, preferably L₁ ≤ 0.3 mm, preferably L₁ ≤ 0.1 mm; or, the second active material layer (15) comprises a second region (152), a side of the second region (152) in the length direction of the electrode plate (10) extending beyond the first active material layer (14), and the second region (152) having a length of L₂, wherein L₂ ≤ 0.5 mm, preferably L₂ ≤ 0.3mm, preferably L₂ ≤ 0.1mm.

13. The electrode plate (10) according to claim 1 or 12, wherein the first active material layer (14) comprises a third region (143), a side of the third region (143) in a width direction of the electrode plate (10) extending beyond the second active material layer (15), and the third region (143) having a width of W₁, wherein W₁ ≤ 0.5 mm, preferably W₁ ≤ 0.3 mm, preferably W₁ ≤ 0.1 mm; or, the second active material layer (15) comprises a fourth region (154), a side of the fourth region (154) in the width direction of the electrode plate (10) extending beyond the first active material layer (14), and the fourth region (154) having a width of W₂ ≤ 0.5 mm, preferably W₂ ≤ 0.3 mm, preferably W₂ ≤ 0.1 mm.

14. A secondary battery (1000), comprising a housing (200) and an electrode assembly (100) disposed within the housing (200), wherein the electrode assembly (100) comprises a separator and the electrode plate (10) according to any one of claims 1 to 13.

15. The secondary battery (1000) according to claim 14, wherein the electrode assembly (100) comprises the separator (20) and the single electrode plate (10), the separator (20) and the single electrode plate (10) being stacked and wound for several circles, or the several electrode plates and the several separators are alternately stacked in sequence; or, the several electrode plates are stacked in sequence, and the single separator (20) is threaded between two adjacent electrode plates in sequence.
